# FASCICULE DE BREVET EUROPEEN

(11) **EP 1 525 078 B1**
(45) Date de publication et mention de la délivrance du brevet: **08.05.2013**
(21) Numéro de dépôt: 03756505.8
(22) Date de dépôt: 24.07.2003
(51) Int. Cl.: B29B 7/90, C08J 3/20

(54) **PROCEDE D'OBTENTION DE MATERIAUX THERMOPLASTIQUES NANOCOMPOSITES PAR EXFOLIATION DE PARTICULES MINERALES LAMELLAIRES DANS UNE MATRICE POLYMERE ET MATERIAUX NANOCOMPOSITES OBTENUS**
VERFAHREN ZUR HERSTELLUNG VON NANOKOMPOSITEN THERMOPLASTISCHEN MATERIALIEN DURCH ABBLÄTTERUNG VON PLÄTTCHENFÖRMIGEN MINERALISCHEN PARTIKELN IN EINER POLYMERMATRIX UND DARAUS HERGESTELLTE NANOVERBUNDSTOFFMATERIALEN
METHOD FOR OBTAINING NANOCOMPOSITE THERMOPLASTIC MATERIALS BY EXFOLIATING LAMINAR MINERAL PARTICLES IN A POLYMER MATRIX AND NANOCOMPOSITE MATERIALS OBTAINED THEREBY

(30) Priorité: 26.07.2002 FR 0209509
(43) Date de publication de la demande: 27.04.2005
(73) Titulaire: Multibase S.A., 38380 St. Laurent du Pont (FR)
(72) Inventeur: BAYET, Alain, F-38380 ST Laurent du Pont (FR); BOUCARD, Sylvain, F-69004 Lyon (FR); PRELE, Patrick, F-73190 Challes les Eaux (FR)
(74) Mandataire: Richaud, Fabien
(86) Numéro de dépôt international: PCT/FR2003/002335
(87) Numéro de publication internationale: WO 2004/012917

(56) Documents cités:
- EP-A- 1 203 650
- DE-C- 10 002 922
- US-B1- 6 388 001

## Description

### DOMAINE DE L'INVENTION

L'invention concerne un procédé de formation de matériaux thermoplastiques nanocomposites par exfoliation, dans une matrice polymère thermoplastique, de particules minérales lamellaires empilées se présentant, avant leur exfoliation, sous la forme d'agglomérats lamellaires dont les lamelles, formant des feuillets, sont superposées et liées entre elles.

L'invention concerne plus particulièrement un procédé d'obtention de matériaux thermoplastiques nanocomposites formés d'une matrice polymère thermoplastique et de nanocharges dispersées dans ladite matrice, les nanocharges résultant de l'exfoliation dans la matrice polymère à l'état thermovisqueux de particules minérales lamellaires empilées, initialement modifiées par un agent organophile pour les rendre au moins partiellement compatibles à l'égard de la matrice polymère.

L'invention concerne également des matériaux thermoplastiques nanocomposites formées d'une matrice polymère et de nanocharges dispersées d'une manière contrôlée au sein de la matrice.

L'invention concerne enfin des articles réalisés au moyen des matériaux thermoplastiques nanocomposites résultant du procédé.

### ETAT DE LA TECHNIQUE

Les matériaux nanocomposites résultent de l'introduction et de la dispersion de charges minérales nanométriques au sein d'une matrice polymère thermoplastique ou thermodure, dans le but de créer des matériaux polymères nanochargés ayant des propriétés remarquables telles que, par exemple, des propriétés mécaniques, thermiques, de surface, de barrières aux gaz, d'ignifugation améliorées, et ce par rapport aux mêmes propriétés de matériaux polymères contenant des charges minérales classiques, de dimensions proches mais supérieures au micromètre (µm) telles que sont les charges minérales connues formées, par exemple, de carbonates de calcium, de kaolins, d'alumines, de silices, de talc ou autres.

Les nanocharges minérales sont généralement issues d'argiles lamellaires se présentant sous la forme d'agglomérats lamellaires dont les lamelles formant des feuillets sont empilées et liées entre elles, qui doivent être exfoliées pour fournir majoritairement des monolamelles de taille nanométrique ne dépassant pas 8000 Å, c'est-à-dire 800 nanomètres.

Pour être exfoliées, ces argiles lamellaires, se présentant sous l'aspect d'empilements de lamelles ou de feuillets ou encore de plaquettes superposées, sont soumises à un traitement approprié susceptible d'assurer la séparation des lamelles les unes des autres pour atteindre, souhaitablement, au mieux l'état recherché de feuillets ou lamelles élémentaires indépendantes et/ou d'empilements partiellement désagrégés de feuillets ou lamelles, de telle sorte que les feuillets ou lamelles ainsi libérés aient une épaisseur au plus égale à 100 Å et, préférentiellement, au plus égale à 50 Å.

Dès lors qu'elles peuvent être séparées les unes des autres, les lamelles élémentaires d'argiles doivent pouvoir être dispersées d'une manière homogène au sein d'une matrice polymère, sans qu'il y ait création de zones de sur-concentration et de zone de sous-concentration en nanocharges ou de phénomènes de réagglomération locale des lamelles, et doivent pouvoir être reçues et acceptées par le matériau polymère constituant la matrice. En d'autres termes, les nanocharges doivent être naturellement compatibles ou rendues compatibles avec le milieu receveur qu'est la matrice polymère.

Pour parvenir à la libération séparative des lamelles formant les agglomérats évoqués, puis à une capacité à disperser ces lamelles libérées de manière homogène dans un milieu polymère et enfin acceptées par ce même milieu parce que rendues compatibles, les argiles lamellaires destinées à devenir des nanocharges sont soumises à des traitements successifs appropriés favorables à leur exfoliation, c'est-à-dire à leur séparation plus ou moions complètes en monolamelles.

Selon un premier type de traitement, et parce qu'ils sont destinés à être introduits en tant que charges dans un milieu organique, les agglomérats d'argiles lamellaires sont rendus organophiles par un traitement en milieu liquide qui consiste en un échange de cations entre les ions sodium présents sur les surfaces des lamelles d'argiles et un cation à échanger tel que de l'ammonium ou du phosphonium apporté par des composés organo-onium. Ces composés organo-onium sont, par exemple, des composés organo-cationiques de formule ⁺NH₃R₁, ⁺NH₂R₂R₃ ou ⁺PR₄R₅R₆R₇ dans lesquelles les radicaux R₁ à R₇ sont des chaînes hydrocarbonées aliphatiques ayant au moins quatre atomes de carbone.

Ces composés organo-cationiques pénètrent par les interstices existant entre les lamelles d'argiles et se fixent, lors de l'échange d'ions, à la surface de ces lamelles d'argiles empilées formant les agglomérats, en déstabilisant l'organisation interlamellaire dans ces agglomérats par un phénomène d'encombrement stérique. Ces composés organo-cationiques provoquent ainsi une amorce d'augmentation de la distance interfoliaire de l'ordre de 2 nanomètres entre les lamelles et simultanément rendent ces lamelles organophiles.

Selon un autre type de traitement qui complète le premier type de traitement évoqué, des agglomérats d'argiles lamellaires, devenus organophiles, sont rendus compatibles à l'égard du matériau polymère formant la matrice au sein de laquelle doivent être dispersées les nanocharges résultant de l'exfoliation des agglomérats d'argiles lamellaires.

Selon cet autre type de traitement, les agglomérats d'argiles lamellaires organophiles sont traités au moyen d'oligomères fonctionnalisés par des groupements polaires tels que, par exemple, -OH, -COOH, -NH₂, -NH-R, qui, grâce à leur groupement polaire, sont susceptibles de créer des liaisons chimiques avec les composés organo-cationiques fixés sur les surfaces des lamelles d'agglomérats d'argiles à exfolier et, dès lors, à les rendre compatibles avec le matériau polymère de la matrice les recevant.

Ainsi, entre les groupements polaires présents sur les oligomères fonctionnalisés et les surfaces des lamelles d'argiles organophiles, s'établissent des liaisons de type chimique, de telle sorte que les oligomères tendent à s'insérer entre lesdites lamelles organophiles en provoquant une déstabilisation physique des lamelles les unes par rapport aux autres, puis une augmentation de leur distance interfoliaire par un phénomène d'encombrement stérique, cette distance interfoliaire étant portée, par ce moyen, de 2 nm à 3,5 nm, c'est-à-dire de 20 Å à 35 Å.

Ainsi traitées par un oligomère compatible avec le milieu polymère matriciel susceptible de recevoir les argiles lamellaires, ces argiles lamellaires deviennent elles-mêmes compatibles à l'égard de ces mêmes milieux polymères susceptibles de les recevoir.

Selon un troisième type de traitement, les agglomérats d'argiles lamellaires rendues organophiles par un échange de cations entre les ions sodium et l'argile lamellaire et un cation apporté par un composé organo-onium, puis traitées au moyen d'oligomères fonctionnalisés pour les rendre compatibles avec des matériaux polymères, sont introduits dans une matrice polymère thermoplastique à l'état fondu pour y être mécaniquement exfoliés et dispersés, l'exfoliation et la dispersion s'effectuant en soumettant la matrice polymère fondue au sein de laquelle sont introduites les particules minérales lamellaires empilées formant les agglomérats organophiles à exfolier, à un important effet de cisaillement mécanique pour provoquer l'éclatement des agglomérats, la séparation des lamelles d'argiles les unes des autres et réaliser leur dispersion dans ladite matrice.

De nombreuses publications attestent de l'importance des travaux conduits pour parvenir à la création de nanocomposites par l'exfoliation des argiles lamellaires dans une matrice en matériaux polymères à l'état fondu.

Dans des publications telles que « Intercalation Chemistry » DE M.S. Whittingham et A.J. Jacobson, édition académique, New York, 1982, ou « Solid State Ionics » 22, 1986-43 de G. LAGALY, sont décrits des traitements de minéraux lamellaires qui dévoilent des capacités séparatives dès lors qu'ils sont traités par un composé organo-ionique, échangeur d'ions, les rendant organophiles.

Dans un autre document (US 4,739,007), sont décrits :
- des nanocomposites formés d'une matrice polymère à base de polyamide au sein de laquelle sont dispersées des argiles, qui sont des silicates d'aluminium, de magnésium telles que de la montmorillonite, ayant une capacité d'échange cationique importante ;
- et un procédé pour produire lesdites nanocomposites.

Ce procédé, destiné à produire ces nanocomposites, comporte trois étapes de formations distinctes.

Selon la première étape du procédé, l'argile ayant une capacité d'échange cationique est traitée par un agent gonflant que ladite argile adsorbe en formant un complexe qui, par la suite, peut être incorporé dans un monomère intervenant dans la formation d'un polyamide, à une température supérieure au point de fusion dudit monomère. Dans cette première étape du procédé, cet échange d'ions apparaît essentiel pour éliminer des ions non souhaités mais présents dans l'argile, tels que Na⁺, K⁺, Ca²⁺ ou Mg²⁺ et les remplacer par des ions inorganiques comme le cuivre, l'hydrogène, l'aluminium ou par des ions dits organiques comme l'ammonium.

L'agent gonflant mis en oeuvre dans la première étape du procédé peut être un composé du type X⁺-R₁-COOH ou X⁺-R₂ dans lesquels X⁺ peut être un ammonium et R₁ ou R₂ sont des chaînes hydrocarbonées en C₃ à C₁₈ tels que, par exemple, l'ion triméthylammonium, l'ion 4-amino-butyrique acide (NH₃⁺-C₃H₆-COOH), l'ion 18-amino-octadécanoïque acide (NH₃⁺-C₁₇H₃₄-COOH).

Cet agent gonflant a la propriété, en particulier, de réduire la force de cohésion lamellaire entre les feuillets, en s'introduisant entre les divers feuillets constituant les empilements argileux, puis en échangeant des ions comme précédemment évoqué, en rendant organophile les feuillets desdites argiles, en augmentant, par un effet stérique, la distance entre ces feuillets de l'argile et, dès lors, en facilitant la pénétration entre les feuillets rendus organophiles du polymère formant la matrice au sein de laquelle doivent être dispersés lesdits feuillets.

Cette première étape du procédé peut se faire, par exemple, en introduisant l'argile choisie dans une solution aqueuse contenant l'agent gonflant, suivie du lavage par de l'eau de l'argile traitée pour éliminer les ions extraits.

Selon la deuxième étape du procédé, l'argile traitée par l'agent gonflant et rendue organophile est mélangée avec un monomère de polyamide, ce mélange s'effectuant dans un réacteur approprié (power-driven mortar) en présence, éventuellement, d'un catalyseur et un accélérateur de polymérisation.

Selon la troisième étape du procédé, le mélange provenant de la deuxième étape est chauffé à une température appropriée, telle que comprise entre 200°C et 300°C, pour provoquer la polymérisation et produire un matériau composite formé d'une matrice polymère au sein de laquelle sont dispersés les feuillets d'argile.

Dans d'autres documents (WO 09304117, US5,747,560), sont décrits des matériaux composites formés d'une matrice polymère au sein de laquelle sont dispersées des particules minérales se présentant sous la forme de lamelles,

et un procédé pour produire ce matériau composite. Le document US-A-5 747 560 décrit un procédé selon le préambule de la revendication 1.

Ce procédé de production de matériaux composites consiste :
- dans une première étape, à former un mélange se composant d'un polymère thermoplastique tel qu'un polyamide à l'état fondu formant une matrice liquide et d'un matériau minéral pulvérulent formé de couches lamellaires se présentant sous la forme d'empilement de lamelles ou plaquettes, rendu compatible à l'égard de la matrice polymère grâce à l'action d'un agent organo-ionique compatibilisant ou gonflant, intervenant comme un échangeur d'ions, cet agent étant sélectionné dans le groupe de cations organiques tels que les ammonium quaternaires du type NH₃⁺R₁, NH₂⁺R₂R₃, tels que les phosphonium quaternaires du type P⁺R₄R₅R₆R₇, dans lesquels les groupements R₁ à R₇ sont des groupements hydrocarbonés comportant, par exemple, de 5 à 12 atomes de carbone.

Le matériau lamellaire mis en oeuvre est choisi dans le groupe des argiles smectiques telle que la montmorillonique, par exemple, dont les plaquettes constitutives doivent avoir une épaisseur d'au plus 100 Å et, préférentiellement, d'au plus 50 Å.

Ce matériau lamellaire est rendu organophile préalablement à son introduction dans la matrice polymère par l'un au moins des agents précités, cet agent compatibilisant ayant la propriété de s'insérer entre les plaquettes et y intervenir comme un agent gonflant, en augmentant la distance entre lesdites plaquettes et, de ce fait, en diminuant la force de cohésion interplaquettes. Cet agent rend, dès lors, compatible l'argile lamellaire rendue organophile à l'égard du polymère constituant la matrice à l'état fondu.
- dans une deuxième étape, à soumettre le mélange liquide résultant de la première étape à une action de cisaillement pour exfolier ou encore pour délaminer au moins 90% des empilements lamellaires ou de plaquettes pour former un matériau composite comprenant une matrice polymère au sein de laquelle sont dispersées les particules nanométriques résultant du traitement de séparation par cisaillement intense : le taux de cisaillement est d'au moins 10 sec⁻¹ et peut aller jusqu'à 20000 sec⁻¹.

Le procédé évoqué peut être pratiqué dans un mélangeur de type connu tel qu'une extrudeuse, un Bamburys, un Brabenders.

Dans un autre document (EP0846723), sont aussi décrits des matériaux composites formés d'un mélange comprenant une matrice polymère qui est de l'alcool polyvinylique et des particules minérales préalablement traitées dont les unes sont sous la forme d'agglomérats formés de lamelles empilées à exfolier et les autres sont des particules lamellaires élémentaires indépendantes, c'est-à-dire déjà exfoliées.

Les agglomérats formés de lamelles minérales empilées à exfolier sont préalablement traités au moyen d'un agent organique intercalant qui peut être choisi dans le groupe formé par des oligomères ou des polymères tels que le polyvinyl pyrolidone, l'alcool polyvinylique ou des copolymères tels que le copolymère d'acétate de vinyl et le vinylpyrolidone. Lors du traitement, cet agent organique intercalant a la propriété de s'insérer entre les particules lamellaires empilées à exfolier et d'augmenter l'espace interlamellaire entre deux lamelles adjacentes d'une manière significative d'environ au moins 5 Å jusqu'à environ 100 Å (Angstrom). Par ce traitement, les agglomérats formés de particules minérales lamellaires empilées à exfolier seraient facilement exfoliées dans la matrice polymère fondue, constituée d'alcool polyvinylique, sans qu'il y ait dégradation dudit alcool polyvinylique.

Selon la description qui en est faite, l'exfoliation des agglomérats préalablement traités, formés de lamelles minérales empilées, dans la matrice d'alcool polyvinylique à l'état fondu, peut être conduite dans un mélangeur-malaxeur discontinu tel qu'un Bambury ou un Brabender, ou bien dans un mélangeur-malaxeur continu tel qu'une extrudeuse, en soumettant le mélange composé de la matrice polymère fondue et des agglomérats minéraux lamellaires à exfolier à l'action d'un cisaillement dont le taux peut varier d'environ 10 secondes⁻¹ à 20.000 secondes⁻¹ et, de manière préférentielle, de 100 secondes⁻¹ à 10.000 secondes⁻¹.

Pour cette action d'exfoliation des agglomérats minéraux lamellaires à exfolier en milieu polymère fondu, lesdits agglomérats peuvent être soumis à une température au moins égale à la température de fusion des oligomères et/ou polymères ayant été intercalés entre les lamelles minérales empilées à exfolier et/ou à des pressions appliquées de 0,5 à 60 atmosphères.

L'observation de l'état de la technique, malgré les substantielles améliorations proposées pour l'obtention de matériaux nanocomposites, révèle l'existence d'inconvénients qui peuvent être majeurs et qui peuvent compromettre, au moins pour partie, l'excellence des caractéristiques apportées par les nanocharges aux matériaux polymères qui sont, par exemple, l'amélioration des propriétés mécaniques, thermiques, de surfaces, de barrières aux gaz, d'ignifugation et autres.

Il est, en effet, observé que l'état de la technique :
- s'intéresse aux traitements préalables des aggomérats de particules minérales lamellaires à exfolier pour faciliter la séparation des lamelles les unes des autres et améliorer la capacité des lamelles minérales élémentaires exfoliées à être dispersées dans la matrice polymère à l'état fondu : ces traitement portent essentiellement sur la nécessité de rendre les agglomérats de particules minérales lamellaires à exfolier organophiles et d'intercaler, entre les lamelles minérales à exfolier, un composé organique qui peut être un oligomère ou polymère pour augmenter la distance interlamellaire et rendre compatibles les particules minérales lamellaires une fois exfoliées à l'égard du polymère constituant la matrice ;
- décrit des moyens d'exfoliation des agglomérats minéraux lamellaires empilés à exfolier qui peuvent être considérés comme énergiques concernant aussi les niveaux de températures du milieu d'exfoliation formé par la matrice polymère à l'état fondu, qui peuvent être excessifs, les pressions auxquelles peut être soumis le milieu d'exfoliation (0,5 à 60 atmosphères), enfin les actions mécaniques de cisaillement du milieu d'exfoliation dont le taux apparaît éminemment variable, allant de 10 secondes⁻¹ à 20000 secondes⁻¹;
- alors que ces moyens procurent des résultats qui peuvent paraître insuffisants dès lors que les matériaux nanocomposites produits selon les procédés de l'état de la technique manifestent des inconvénients tels que dégradation plus ou moins perceptible du ou des polymères formant la matrice d'accueil des agglomérats minéraux lamellaires à exfolier, la présence après l'exfoliation d'agglomérats minéraux lamellaires empilés non exfoliés, une dispersion assez irrégulière des particules minérales lamellaires élémentaires résultant de l'exfoliation au sein de la matrice polymère à l'état fondu, avec apparition de zones de forte et de faible concentrations en particules minérales lamellaires élémentaires et, enfin, résultant de ces procédés, des matériaux nanocomposites dont les caractéristiques attendues sont affaiblies.

### Objets de l'invention

Les divers objets assignés à l'invention découlent naturellement des inconvénients de l'état de la technique encore existants et à éliminer.

Parmi les objets les plus importants assignés à l'invention, peuvent être évoqués :
- la nécessité d'éliminer le risque de dégradation des composés polymères formant la matrice par des chocs thermiques provoqués par un excès de cisaillement mécanique des polymères dans un état thermovisqueux ;
- l'obligation de conduire l'exfoliation des agglomérats minéraux lamellaires dans la matrice polymère dans un état thermovisqueux sous un profil de températures qui soit raisonnable pour l'intégrité du matériau polymère de la matrice ;
- l'exigence de parvenir à un taux d'exfoliation en milieu polymère dans un état thermovisqueux des agglomérats minéraux lamellaires empilés à exfolier d'au moins 95%, et préférentiellement d'au moins 98%, pour limiter, voire éliminer des matériaux nanocomposites, la présence d'agglomérats non exfoliés ;
- l'exigence également de parvenir à une dispersion homogène, dans la matrice polymère dans un état thermovisqueux, des particules minérales lamellaires élémentaires ou feuillets résultant de l'exfoliation ;
- enfin, l'exigence que le procédé selon l'invention produise des matériaux nanocomposites ayant des caractéristiques physiques, mécaniques et autres améliorées et que ce procédé ait l'aptitude de reproduire, sans défaillance, lesdits matériaux nanocomposites.

Pour faciliter la compréhension de la description de l'invention, certaines expressions régulièrement utilisées dans le texte sont commentées :
- les particules minérales lamellaires empilées à exfolier sont des agglomérats minéraux, d'origine naturelle ou synthétique formés d'une pluralité de lamelles élémentaires, empilées, adjacentes et liées entre elles, ayant chacune une épaisseur inférieure à 100 Å, et préférentiellement comprise entre 2 Å et 20 Å, les surfaces des lamelles élémentaires pouvant être rendues organophiles par un traitement approprié. Les particules minérales monolamellaires élémentaires résultent de l'exfoliation des agglomérats d'argile et constituent les nanocharges.
- Les nanocharges ou particules minérales lamellaires élémentaires sont formées de particules minérales essentiellement monolamellaires ou monofeuillets, qui résultent de l'exfoliation d'agglomérats qui sont des particules minérales lamellaires empilées, ces particules monolamellaires, ayant une épaisseur entre 2 Å et 20 Å et pouvant contenir également des particules multilamellaires ou multifeuillets dont les lamelles élémentaires ou feuillets, liées entre elles, sont en nombre très restreint et constituent des empilements ayant résisté à l'exfoliation et ne dépassant pas l'épaisseur de 20 Å.
- La matrice polymère est constituée de composés polymères thermoplastiques au sein de laquelle s'effectue l'exfoliation en milieu matriciel thermovisqueux des particules minérales lamellaires empilées à exfolier.
- Les matériaux thermoplastiques nanocomposites sont formés d'une matrice polymère thermoplastique au sein de laquelle sont dispersées les nanocharges résultant de l'exfoliation des particules minérales lamellaires empilées.

### Sommaire de l'invention

L'élimination des multiples inconvénients précédemment évoqués lors de l'examen de l'état de la technique, et les divers objets assignés à l'invention peuvent être atteints grâce au procédé d'obtention de compositions thermoplastiques nanocomposites selon l'invention par exfoliation de particules minérales lamellaires dans une matrice polymère à l'état thermovisqueux, ce procédé apportant, en outre, de substantielles améliorations aux moyens antérieurement décrits et produisant des nanocomposites révélant une capacité excellent d'exfoliation se manifestant par une absence d'agglomérat et une remarquable et homogène dispersion des nanocharges au sein de la matrice polymère.

Selon l'invention, le procédé d'obtention de matériaux nanocomposites formés d'une matrice polymère thermoplastique et de nanocharges minérales dispersées dans ladite matrice, ces nanocharges résultant de l'exfoliation d'agglomérats formés de particules minérales lamellaires empilées dans la matrice placée, dans un état thermovisqueux, procédé consistant en :
(a) la mise en oeuvre d'une composition à exfolier, comprenant au moins un composé polymère thermoplastique pour former la matrice polymère, des particules minérales faites d'empilements minéraux lamellaires à exfolier, préalablement traitées au moyen d'un agent organo-ionique pour rendre ces particules minérales lamellaires organophiles, éventuellement au moins un agent de compatibilité pour rendre compatibles entre elles la matrice polymère et les particules minérales lamellaires traitées à exfolier ;
(b) la formation d'un mélange visco-élastique par malaxage et chauffage de la composition à exfolier par la mise dans un état visqueux des composés polymères présents dans ladite composition à une température au moins égale à la température de mise en oeuvre du composé polymère le plus visqueux, et simultanément par le malaxage des composés polymères avec les particules minérales lamellaires traitées à exfolier ;
(c) la soumission à un travail thermomécanique à l'état visqueux comprenant une compression et un cisaillement significatif du mélange visco-élastique contenant les particules minérales lamellaires empilées traitées à exfolier ;
(e) l'élimination des composés volatiles générés par le travail thermomécanique du mélange visco-élastique ;
(f) la transformation du mélange visco-élastique dégazé en un matériau industriellement utilisable ;
caractérisé en ce que, pour obtenir une exfoliation complète des particules minérales lamellaires traitées, et une dispersion contrôlée des particules minérales lamellaires élémentaires nanométriques résultant de l'exfoliation dans le mélange visco-élastique, (d) ledit mélange visco-élastique issu du travail thermomécanique de compression et de cisaillement est soumis à une relaxation sous malaxage mécanique doux, à faible taux de cisaillement, avant d'être transformé en un matériau industriellement utilisable.

L'invention concerne également des matériaux nanocomposites, issus du procédé, formés d'une matrice polymère et de nanocharges résultant de l'exfoliation complète des particules minérales lamellaires dans la matrice polymère à l'état thermovisqueux, se caractérisant :
- par une quasi absence d'agglomérats formés de particules minérales lamellaires non exfoliées ;
- par une homogénéité contrôlée de la dispersion des nanocharges au sein de la matrice polymère par rapport à une morphologie recherchée de ces nanocharges.

### Description détaillée de l'invention

Pour bien comprendre le problème technique qui se pose et qui résulte de l'état de la technique et la manière dont le procédé selon l'invention apporte une réponse à ce problème technique, il est nécessaire d'examiner les diverses actions conduites à partir de l'état de la technique pour comprendre la solution apportée qui constitue l'objet du procédé selon l'invention.

S'il est bien connu, comme l'état de la technique l'exprime, que les matériaux nanocomposites ont pour raison d'être la recherche de l'amélioration des propriétés des matériaux composites tels que, par exemple, des caractéristiques mécaniques améliorées, il apparaît, à travers l'état de la technique, que les procédés destinés à réaliser des matériaux nanocomposites sont mal maîtrisés et que les matériaux nanocomposites, issus de ces procédés, ne peuvent être satisfaisants pour des applications telles que des barrières aux gaz, aux solvants et autres. Il apparaît effectivement patent que :
- les procédés proposés pour l'obtention des matériaux nanocomposites ne sont pas absolument reproductibles, conduisant ainsi à la production de matériaux dits « nanocomposites » dont les caractéristiques obtenus ne sont pas les caractéristiques initialement attendus pour de tels composés et, dès lors, ne constituent pas des procédés suffisamment fiables pour la production de matériaux destinés à des applications industrielles devant répondre à des cahiers des charges précis et contraignants.
- les matériaux dits « nanocomposites », issus de ces procédés, révèlent, par examen microscopique, la présence d'agglomérats conséquents non exfoliés, c'est-à-dire formés de particules minérales lamellaires dont les lamelles sont encore empilées et liées entre elles, et qui n'ont pas été libérées les unes des autres lors de l'exfoliation. Ainsi, la présence d'agglomérats agit sur les caractéristiques des nanocomposites qui peuvent devenir irrégulières ou qui peuvent être diminuées alors qu'elles étaient attendues renforcées.

Or, selon l'invention, et en opposition à ce qui est mentionné dans l'état de la technique, il est apparu possible de parvenir à des nanocomposites à matrices polymères thermoplastiques chargées de particules minérales nanométriques formant des nanocharges exemptes d'agglomérats et dispersées d'une manière contrôlée dans les matrices, ces nanocharges résultant de l'exfoliation, dans les matrices polymères à l'état thermovisqueux, d'agglomérats formés d'empilement de particules minérales lamellaires et liées les unes aux autres en donnant des particules minérales essentiellement monolamellaires de dimension nanométrique, à condition que :
- les agglomérats à exfolier aient été, préalablement à l'exfoliation dans la matrice polymère à l'état thermovisqueux, traités par un agent organo-ionique pour les rendre organophiles ;
- le mélange visco-élastique, formé des composés polymères, des agglomérats rendus organophiles et, éventuellement, d'un agent de compatibilité, soumis au travail thermomécanique à l'état visqueux comprenant compression et cisaillement, soit ensuite soumis à une relaxation contrôlée sous un malaxage pratiquement exempt de cisaillement, cette relaxation contrôlée du mélange visco-élastique ayant la propriété d'évacuer, pendant un temps maîtrisé, toutes les contraintes mécaniques imposées audit mélange visco-élastique lors de l'action thermomécanique comprenant compression et cisaillement.

Il est en effet remarquable d'observer les différences essentielles existant dans un matériau thermoplastique nanocomposite issu d'un procédé appartenant à l'état de l'art et dans un matériau thermoplastique nanocomposite de même composition, mais issu du procédé selon l'invention, dont la différence essentielle consiste en la création, dans le procédé selon l'invention, d'une étape de relaxation du mélange visco-élastique, après qu'ait été pratiquée l'étape de travail thermomécanique impliquant compression et cisaillement significatif de ce mélange.

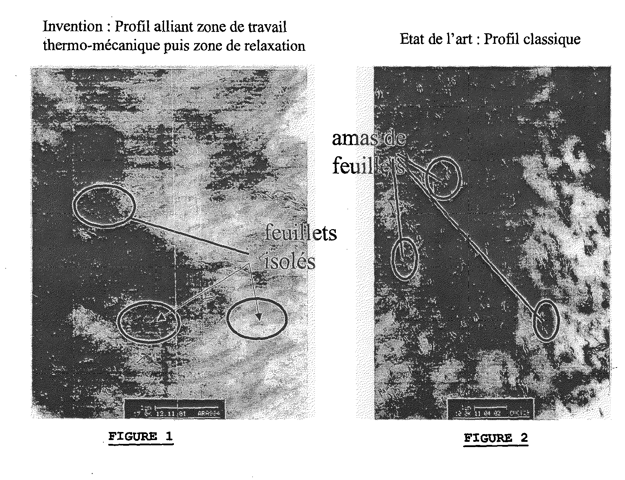

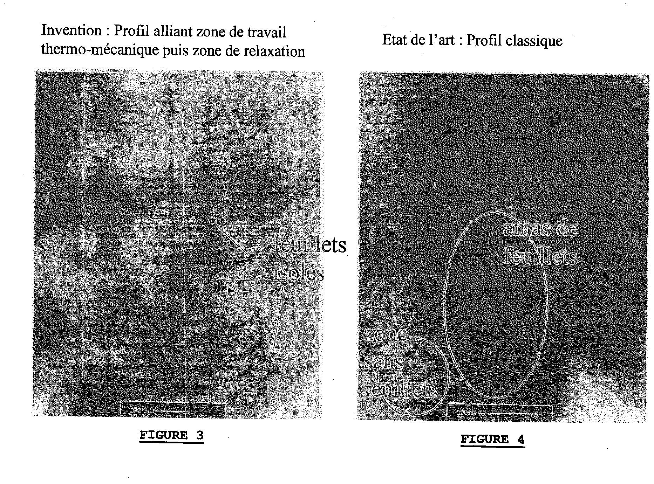

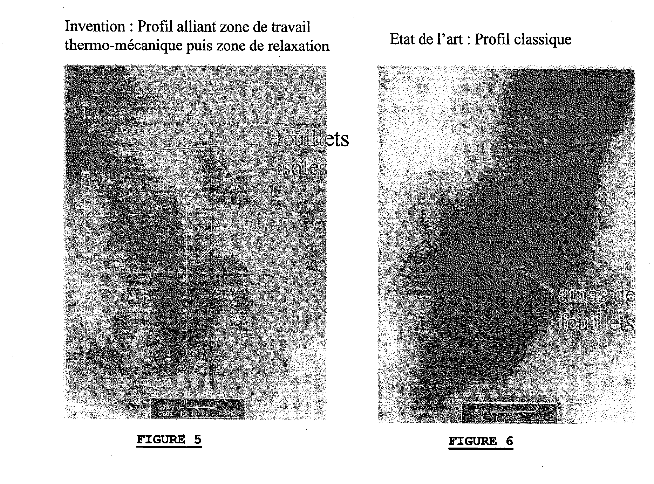

Dans le cas du procédé relevant de l'état de la technique, le mélange visco-élastique extrudé après qu'il ait été soumis à l'étape de travail thermomécanique comprenant compression et cisaillement, fournit un matériau dit nanocomposite dans lequel il est constaté, par analyse microscopique, la présence de nombreux agglomérats non exfoliés, formés d'empilements lamellaires minéraux, pour lequel les améliorations de propriétés attendues telles que, par exemple, les caractéristiques mécaniques ou les effets barrières ne sont pas réellement confirmées (figures 2, 4, 6).

Par contre, dans le cas du procédé relevant de l'invention, le mélange visco-élastique mis en oeuvre après qu'il ait été soumis à l'étape de travail thermomécanique impliquant compression et cisaillement suivi de l'étape de relaxation selon l'invention, fournit un matériau nanocomposite dans lequel il peut être constaté, par la même analyse microscopique, la quasi-absence d'agglomérats montrant ainsi l'excellence de l'exfoliation résultant du procédé selon l'invention pour lequel les propriétés se révèlent supérieures à celles constatées pour le matériau résultant du procédé appartenant à l'état de la technique (figures 1, 3, 5).

Le temps pendant lequel le mélange visco-élastique ayant subi un travail thermomécanique impliquant compression et cisaillement est soumis à une relaxation contrôlée selon l'invention, est au moins égal au temps pendant lequel ledit mélange visco-élastique est soumis audit travail thermomécanique impliquant compression et cisaillement significatif précédant la relaxation. Ce temps est souhaitablement compris entre 3 fois et 10 fois le temps pendant lequel le mélange visco-élastique a été soumis audit travail thermomécanique de compression et cisaillement.

La température du mélange visco-élastique au moment où ledit mélange visco-élastique est soumis à la relaxation contrôlée selon l'invention est au moins égale à la température du mélange visco-élastique à la fin du travail thermomécanique comprenant compression et cisaillement mais peut être supérieure tout en restant comprise entre la température de fusion Tf dans le cas d'un polymère cristallin ou bien la température de transition vitreuse Tg dans le cas d'un polymère amorphe et la température de dégradation Td des composés polymères formant la matrice.

Pour que le mélange visco-élastique issu du travail thermomécanique impliquant compression et cisaillement puisse être soumis à une relaxation sous malaxage mais sans cisaillement significatif, cette relaxation est pratiquée :
- dans le cas d'un mélangeur-malaxeur discontinu tel qu'un Bambury, dans ledit mélangeur au terme de l'opération de travail thermomécanique comportant compression et cisaillement, par réduction importante du travail thermomécanique jusqu'à éliminer son action significativement cisaillante pour ne conserver que son action de mélangeage et à maintenir le mélange visco-élastique sous faible agitation pendant le temps de relaxation ;
- dans le cas d'un mélangeur continu du type extrudeuse, en y créant au moins une zone de relaxation contrôlée du mélange visco-élastique placée après la zone de travail thermomécanique comprenant compression et cisaillement et avant la zone de compression-extrusion.

Dans le deuxième cas relatif à un mélangeur continu du type extrudeuse, la zone de relaxation créée est :
- munie de moyens mécaniques qui assurent l'action mécanique douce d'agitation-malaxage et le transfert physique du mélange, sans créer un phénomène de cisaillement significatif dont l'existence pourrait rompre l'état de relaxation du mélange visco-élastique nécessaire à l'obtention d'un nanocomposite, mélange visco-élastique au sein duquel l'exfoliation des charges minérales lamellaires est complète ;
- également munie de moyens de chauffage et de régulation thermique de telle sorte que le mélange visco-élastique soumis à la relaxation contrôlée soit placé et maintenu au niveau de température nécessaire à cette étape du traitement, c'est-à-dire que la température dudit mélange visco-élastique soit comprise dans l'intervalle délimité par la température de fusion Tf et/ou de transition vitreuse Tg et la température de dégradation Td des composés polymères formant la matrice.

Dès lors, et selon l'invention, l'étape de la relaxation contrôlée du mélange visco-élastique :
- dans le cas où ladite relaxation est conduite dans un mélangeur-malaxeur discontinu, doit assurer au mélange visco-élastique un temps de séjour suffisant sous une agitation mécanique pratiquement démunie d'effet significativement cisaillant et sous une température contrôlée conforme au domaine de température précédemment évoqué ;
- dans le cas où ladite relaxation est conduite dans un malaxeur continu de type extrudeuse, cette relaxation contrôlée s'effectue dans au moins une zone spécifique incorporée dans ledit malaxeur, zone qui a une longueur déterminée pour assurer un temps de séjour suffisant au mélange visco-élastique pour permettre à ce mélange, fortement sollicité par le cisaillement et la compression mécanique antérieurs, de se détendre en provoquant la désagrégation des agglomérats formés des empilements lamellaires minéraux exfoliables mais non encore exfoliés, et en libérant les particules minérales monolamellaires, ou feuillets, de dimensions nanométriques au sein de la matrice polymère dans laquelle ces particules sont ensuite dispersées de façon contrôlée.

Cette action de relaxation du mélange visco-élastique selon l'invention se fait sous une température contrôlée et réglée, et sous un malaxage préférentiellement à faible taux de cisaillement, ce taux étant au plus égal à 10⁴ seconde⁻¹ et compris entre 10 seconde⁻¹ et 10⁴ seconde⁻¹.

Quand la relaxation du mélange visco-élastique est pratiquée dans un malaxeur continu de type extrudeuse, la au moins une zone de relaxation peut avoir une longueur comprise entre 8% et 40%, et préférentiellement entre 8% et 25% de la longueur totale de la vis de l'extrudeuse, étant précisé que cette longueur totale de la vis de l'extrudeuse est donnée par sa seule partie active, c'est-à-dire qu'elle exclut toute la partie de la vis permettant l'accouplement et l'entraînement mécanique de ladite vis.

Ainsi, et conformément à l'invention, la relaxation peut se faire dans une seule zone de relaxation ou dans plusieurs zones de relaxation, qu'il y ait ou non plusieurs zones de travail thermomécanique comprenant compression et cisaillement significatifs. Dans le cas de plusieurs zones de relaxation, la longueur des diverses zones cumulées peut être également comprise entre 8% et 40%, et préférentiellement entre 8% et 25% de la longueur totale de la vis de l'extrudeuse.

Selon l'invention, et dans le cas d'un malaxeur continu de type extrudeuse, l'origine d'au moins une zone de relaxation du mélange visco-élastique se situe à une distance exprimée en pourcentage par rapport à la longueur totale de la vis préférentiellement comprise entre 40% et 65% de l'extrémité amont de la vis dudit malaxeur.

### Etape a) du procédé

Dès lors, et selon l'invention, les composants intervenant dans la composition à soumettre à exfoliation, conformément à l'étape a) du procédé, qui sont :
- au moins un composé polymère thermoplastique pour former la matrice polymère ;
- des particules minérales lamellaires empilées à exfolier dans la matrice polymère à l'état thermovisqueux, ces particules se présentant sous l'aspect d'agglomérats lamellaires traités préalablement à l'exfoliation, au moyen d'un agent organo-ionique pour les rendre organophiles ;
- éventuellement, au moins un agent de compatibilité pour rendre compatibles les particules minérales lamellaires à exfolier avec le au moins un polymère constituant la matrice ;
   peuvent être introduits :
- dans le mélangeur-malaxeur discontinu, d'une manière simultanée, c'est-à-dire selon un mélange pulvérulent préalablement constitué par les divers composants, ou bien, préférentiellement séparément en commençant par les matières polymères thermoplastiques portées, sous malaxage, à un niveau de température les rendant thermovisqueuses et permettant l'introduction des particules minérales lamellaires à exfolier ;
- dans le malaxeur continu de type extrudeuse, simultanément par la trémie d'alimentation après que les divers composants aient été, préalablement à leur introduction, mélangés à sec selon des quantités propres à chaque composant pour former la composition à exfolier, ou encore, préférentiellement selon des zones particulières d'introduction, telles que, par exemple, d'abord les matières polymères thermoplastiques par la trémie d'alimentation, puis les particules minérales lamellaires à exfolier après qu'elles aient été rendues organophiles par un traitement approprié, à une distance de l'extrémité amont de la vis comprise entre 0% et 45 % et préférentiellement entre 0% et 33% de la longueur totale de la vis.

Les composés polymères thermoplastiques constituant la matrice polymère mise en oeuvre dans le procédé selon l'invention sont choisis dans le groupe constitué par les polymères et/ou par les copolymères thermoplastiques ayant une température de fusion Tf ou une température de transition vitreuses Tg, de telle sorte que ces polymères et/ou copolymères thermoplastiques, pris seuls ou en mélange :
- puissent former, par un travail thermomécanique, un milieu thermovisqueux suffisant pour pouvoir accueillir les particules minérales lamellaires à exfolier ;
- soient susceptibles de supporter, sans dégradation sensible, l'action de travail thermomécanique à laquelle ils sont soumis en générant des chocs thermiques ponctuels qui peuvent être importants lors des opérations de compression, cisaillement et de compression et extrusion.

Les composés polymères constituant la matrice polymère mise en oeuvre dans le cadre de l'invention sont des polymères thermoplastiques du type homopolymère et/ou copolymère, utilisés seuls ou en mélange. Ces polymères peuvent être choisis dans le groupe constitué par les polyoléfines, les polystyrène, les polyamides, les polyesters, les alcools polyvinyliques, les polyuréthanes thermoplastiques, les polymères à base de silicium tels que les polysiloxanes et les élastomères thermoplastiques, tous ces polymères pouvant être également greffés. Toutefois, ces polymères sont préférentiellement issus du groupe constitué par les polyoléfines homo ou copolymères, greffées ou non, les élastomères greffés ou non.

Parmi les polyoléfines greffées ou non, au moyen d'un monomère polaire ou d'un oligomère fonctionnalisés, mises en oeuvre dans le cadre de l'invention, peuvent être citées, à titre d'exemple, le polyéthylène basse densité, le polyéthylène basse densité linéaire, le polyéthylène ultra-basse densité, le polyéthylène haute densité, le polyéthylène haute densité et haut poids moléculaire, le polyéthylène haute densité et ultra haut poids moléculaire, le polyéthylène moyenne densité, le polyéthylène métallocène, le polyisobutylène, le polybutène, le polyméthylpenlène, le polyisoprène, le polybutadiène, les cyclooléfines comme, par exemple, cyclopentène ou norbornène, le polypropylène, les copolymères d'éthylène-propylène, les copolymères d'éthylène et d'α-oléfine en C₄ à C₁₀, les copolymères de propylène et d'α-oléfine en C₄ à C₁₀, des copolymères oléfiniques fonctionnalisés et/ou greffés au moyen d'au moins un monomère polymérisable fonctionnel tel que l'anhydride maléique, l'anhydride itaconique, l'anhydride citraconique, les acides acryliques, méthacryliques, les esters de ces acides ou autres monomères.

Parmi les élastomères greffés ou non au moyen d'un monomère polaire ou d'un oligomère, mis en oeuvre dans le cadre de l'invention, peuvent être cités, par exemple les élastomères oléfiniques, les élastomères styréniques, les élastomères polyesters, les élastomères polyuréthanes, les élastomères polysiloxanes (élastomères silicone) comme l'éthylène-propylène-diène (EPDM), les copolymères d'éthylène-propylène (EPR), copolymère d'éthylène-acétate de vinyle (EVA), le mélange d'un copolymère avec un polymère comme par exemple polypropylene/copolymère d'éthylène-propylène, polyéthylène basse densité/copolymère d'acétate de vinyle, copolymères d'éthylène et d'esters acrylique et méthacrylique, en particulier les acrylates de méthyl ou d'éthyl, les méthacrylates de méthyl ou d'éthyl (EMA, EEA), de styrène-butadiène-styrène (SBS), les styrènes éthylène-butadiène-styrène (SEBS), de styrène-propylène-styrène (SPS), de styrène-isoprène-styrène (SIS), les élastomères silicones vulcanisables à froid (EVF, RTV) ou vulcanisables à chaud (EVC).

Les polymères et/ou copolymères et/ou élastomères mis en oeuvre dans le cadre de l'invention peuvent être pris seuls ou en mélange.

Les particules minérales lamellaires à exfolier, formées d'empilements lamellaires, entrant, une fois exfoliées, dans la composition des matériaux nanocomposites selon l'invention, sont d'origine naturelle ou synthétique. Elles peuvent être des argiles à base de silicates de magnésium et d'aluminium, pouvant contenir d'autres cations tels que du sodium, se présentant sous l'aspect d'une structure colamellaire, à facteur de forme élevé, à lamelles souples, liées entre elles par une force de cohésion qu'il faut rompre par exfoliation pour obtenir des particules minérales mono-lamellaires ayant une épaisseur préférentiellement comprise entre 2 Å et 20 Å.

Ces matériaux, formés de particules minérales lamellaires à exfolier, sont choisis, en pratique, pour les matériaux d'origine naturelle, dans les groupes constitués par :
- préférentiellement les argiles dont les surfaces de lamelles constitutives ont capacité à échanger des ions avec un composé organo-ionique auquel elles sont exposées, tel que le groupe des smectites, composé de la montmorillonite, la nontronite, la beidellite, la volkonskoite, l'hectorite, la saponite, la sanconite, la magadiite, et la kenyaite, le groupe de la vermiculite, le groupe des illites telle que la lédikite ;
- éventuellement, des argiles dont les surfaces des lamelles constitutives sont faiblement ou pas du tout chargées et, dès lors, n'ont pas une capacité à échanger des ions, telles que les argiles chlorées, les chalcogénides ou autres ;
- des argiles dont les lamelles ou feuillets ont une surface spécifique préférentiellement élevée, c'est-à-dire d'au moins 200 m²/g et préférentiellement comprise entre 300 m²/g et 800 m²/g ;
- des argiles ayant un facteur de forme défini par le rapport de la plus grande dimension sur la plus petite dimension des agglomérats de particules lamellaires à exfolier compris entre 1 et 1000.

Ces argiles formées de particules minérales lamellaires empilées à exfolier sont soumises à un traitement préalable à leur mise en oeuvre dans le cadre de l'invention au moyen d'un agent approprié tel qu'un composé organo-ionique, traitement décrit dans l'état de la technique et bien connu de l'homme de l'art.

Ce traitement préalable à l'exfoliation des particules minérales lamellaires empilées à exfolier poursuit le but :
- de rendre organophiles lesdites particules minérales à exfolier pour en faciliter l'exfoliation dans la matrice polymère thermovisqueuse ;
- de contrôler la dispersion des particules minérales lamellaires plus facilement dispersables dans la matrice polymère à l'état thermovisqueux ;
- de créer les conditions d'acceptation par la matrice polymère des particules minérales à exfolier, puis à disperser, dans cette matrice, en rendant les particules minérales lamellaires à exfolier et à disperser compatibles avec la matrice polymère d'accueil.

Un des agents possible de traitement des particules minérales lamellaires à exfolier peut être un composé organo-ionique ayant la faculté d'échanger des cations présents sur les lamelles d'argiles dans les interstices interlamellaires, tels que, par exemple, des ions de sodium, par des ions apportés au moyen d'un composé organo-ionique ou organo-onium tel qu'un composé organo-ammonium ou un composé organo-phosphonium, ce composé organo-onium pouvant être, par exemple, de l'un des types NH₃⁺R₁, NH₂⁺R₂R₃, P⁺R₄R₅R₆R₇, dans lesquels les radicaux R₁ à R₇ sont des chaînes hydrocarbonées ayant au moins quatre atomes de carbone.

Ces divers composés organo-onium, qui se fixent lors de l'échange d'ions, par exemple le sodium remplacé par l'ammonium, sur les surfaces des lamelles d'argile empilées, rendent les lamelles organophiles, c'est-à-dire que ces divers composés peuvent jouer le rôle de compatibilisant pour les particules minérales lamellaires à exfolier ou déjà exfoliées à l'égard de la matrice polymère à l'état thermovisqueux qui les accueille, par la création d'affinités réciproques.

Un autre agent possible de traitement des particules minérales lamellaires à exfolier peut être formé par le mélange d'au moins un composé organo-ionique et d'au moins un composé organo-silane tel qu'il est décrit dans le brevet US 5,747,560.

Ces divers composés organo-onium, offrent d'autres propriétés particulières aux particules minérales lamellaires empilées à exfolier, outre cette première propriété précédemment évoquée qui est celle de rendre organophiles lesdites particules.

L'une de ces autres propriétés peut consister à faciliter l'exfoliation des agglomérats des particules lamellaires empilées par un effet d'encombrement stérique de leur molécule car, dès lors que ces composés, en particulier les composés organo-onium, ont capacité à se fixer sur lesdites lamelles par échange d'ions, ces composés agissent, dans l'espace interstitiel, comme un agent gonflant, qui élargit l'espace interstitiel en augmentant la distance entre deux particules lamellaires contiguës et affaiblissant les forces de cohésion interlamellaires. L'élargissement de l'espace interstitiel peut passer, grâce à la présence de cet agent, de 20 Å à 35 Å, puis supérieur à 60 Å en combinant son action avec un travail thermo-mécanique. Dès lors, l'exfoliation des particules minérales lamellaires empilées en est facilitée et est considérée comme réalisée quand la distance entre les particules minérales lamellaires issues du procédé selon l'invention est au moins égale, et préférentiellement supérieure à 60 Å.

Une autre de ces propriétés particulières peut consister à empêcher la réagglomération des particules lamellaires élémentaires résultant de l'exfoliation et à favoriser une dispersion contrôlée au sein de la matrice polymère thermovisqueuse, des particules minérales élémentaires résultant de l'exfoliation selon le procédé de l'invention, les forces de cohésion interlamellaires ayant été fortement amoindries par le traitement préalable des particules minérales lamellaires empilées.

De tels traitements sont décrits dans l'état de la technique, par exemple dans les brevets US4,739,007, US5,747,560, EP0846723, dans la demande internationale, W009304117, mais également dans de nombreux autres documents.

La quantité de composés organo-ioniques mis en oeuvre dans le cadre de l'invention (US5,747,560) peut varier de façon substantielle entre 10 mmoles à 1000 mmoles, préférentiellement entre 20 mmoles et 200 mmoles, et très préférentiellement entre 80 mmoles à 120 mmoles, pour 100 g de particules minérales lamellaires empilées à traiter.

Outre l'agent organo-onium précédemment évoqué selon l'invention, au moins un agent de compatibilité peut être introduit dans la composition qui doit être soumise à une action d'exfoliation, cet agent de compatibilité ayant la capacité de rendre compatibles entre elles la matrice polymère et les particules minérales lamellaires empilées à exfolier dans la matrice polymère placée dans un état thermovisqueux, puis à disperser d'une manière contrôlée au sein de cette matrice les particules minérales lamellaires exfoliées.

De tels agents de compatibilité peuvent être choisis parmi les oligomères et/ou télomères fonctionnalisés ou parmi les polymères et/ou copolymères et/ou élastomères thermoplastiques éventuellement fonctionnalisés et/ou greffés.

Dans le cas où les agents de compatibilité sont choisis parmi les oligomères et/ou télomères fonctionnalisés, les groupements fonctionnels présents sont des groupements polaires tels que hydroxydes (mono, di ou trihydroxydes), acides (mono, di ou triacides), anhydrides, amines (mono ou diamines), isocyanates ou autres.

Ces oligomères et/ou télomères sont préférentiellement de structures chimiques acrylique, méthacrylique, vinylique, styrénique, diénique.

Chaque structure comporte l'un au moins des groupements fonctionnels réactifs précédemment énoncés et est obtenue à partir de monomères polymérisables issus de ces diverses structures.

Dans le cas où les agents de compatibilité sont choisis parmi les polymères et/ou copolymères et/ou élastomères thermoplastiques fonctionnalisés et greffés, lesdits polymères, copolymères ou élastomères thermoplastiques sont fonctionnalisés par l'une ou l'autre des méthodes connues consistant en :
- un greffage direct au moyen d'un monomère approprié, muni d'une double liaison 〉C=C〈 ce monomère apportant également l'une au moins des fonctions réactives citées dans le paragraphe relatif aux oligomères et télomères fonctionnalisés, le greffage s'effectuant sur un polymère activé tels que par ozonisation, par rayonnement ultraviolet, par plasma, par irradiation, par rayonnement d'électrons ou par rayonnement gamma bien connus ou en présence d'un amorceur radicalaire tel que les péroxydes, les hydropéroxydes également bien connus ;
- une fonctionnalisation par copolymérisation qui, dans le cas par exemple des polyoléfines, consiste à copolymériser un monomère oléfinique avec au moins un monomère porteur d'une double liaison 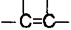 et d'une fonction réactive. Un tel monomère peut être par exemple de l'acide acrylique, de l'acide méthacrylique, de l'acétate de vinyle, d'anhydride maléique, de l'acrylate de méthyle, de l'acrylate d'éthyle, copolymérisé avec de l'éthylène.

Grâce à leurs groupements polaires, ces agents de compatibilité sont susceptibles de créer des interactions physico-chimiques avec les composés organophiles tels que, en particulier, les composés organo-ioniques fixés sur les surfaces des lamelles d'agglomérats d'argiles traitées à exfolier. Dès lors, ces agents de compatibilité que sont les oligomères fonctionnalisés, les polymères et/ou les copolymères greffés, les polymères et/ou copolymères et/ou élastomères mis en oeuvre selon l'invention peuvent être choisis parmi ceux pouvant entrer dans la composition de la matrice polymère.

Selon l'invention, la quantité de particules minérales lamellaires empilées à exfolier, préalablement traitées et entrant dans la composition polymère, est d'au plus 60% en poids et préférentiellement comprise entre 0,2% en poids et 40% en poids du poids total de ladite composition.

Toutefois, cette quantité de particules minérales lamellaires à exfolier entrant dans la composition polymère est liée à l'usage qui sera fait des nanocomposites et, en particulier, des caractéristiques souhaitées pour cet usage.

Selon l'invention, la quantité de l'agent de compatibilité susceptible d'entrer dans la composition polymère à exfolier est comprise entre 0% en poids et 40% en poids et préférentiellement comprise entre 2% en poids et 20% en poids de la masse des particules minérales lamellaires empilées à exfolier dans la matrice polymère à l'état thermovisqueux.

Selon l'invention, il est aussi possible d'introduire, dans la composition à exfolier, un agent dispersant des particules minérales lamellaires, résultant de l'exfoliation, compatible avec le composé polymère thermoplastique de la matrice, pour en favoriser la dispersion au sein de ladite matrice et, ainsi, diminuer le temps nécessaire à la dispersion homogène desdites particules exfoliées dans le mélange des composés polymères à l'état thermovisqueux. Un tel agent dispersant doit être choisi parmi ceux compatibles avec les composés polymères formant la matrice.

A titre illustratif, quand le composé polymère thermoplastique de la matrice est d'origine polyoléfinique, l'agent dispersant des particules minérales lamellaires résultant de l'exfoliation peut être choisi parmi les composés dont la structure chimique comporte au moins une fonction acide, neutralisée ou non, apportée par un groupement du type carboxylique, phosphorique, phosphonique, sulfurique, sulfonique, cette structure comportant aussi :
- de l'oxyde d'éthylène et/ou de l'oxyde de propylène dont le nombre cumulé de motifs de l'un et/ou de l'autre est choisi dans l'intervalle allant de 1 à 300,
- un groupement R qui peut être un groupe alkyl saturé ou non, linéaire ou non, un groupe aryl, un hétérocycle saturé ou non, chaque groupe ayant un nombre d'atomes de carbone au plus égal à 28C et souhaitablement choisi dans l'intervalle de 8 à 24C, un groupe stéroïde, le groupement R pouvant avoir au moins une fonction du type -OH, -COOH, -COOR, -NH₂, -CO-NH₂, -CN,
- un groupement R' qui peut être de l'hydrogène ou une chaîne carbonée ayant un nombre de carbone au plus égale à 28C et préférentiellement comprise entre 1 et 4C.

La concentration en cet agent dispersant est généralement comprise entre 0,01% en poids et 1% en poids, et préférentiellement de 0,1% en poids à 0,6% en poids de la masse des particules minérales lamellaires empilées à exfolier introduite dans la composition.

Selon l'invention, il est également possible d'introduire, dans la composition à exfolier, d'autres agents bien connus de l'état de la technique. Ces divers agents peuvent être des stabilisants thermiques, photochimiques, des anti-oxydants, des antistatiques, des lubrifiants, des ignifugeants, des colorants, des arômes, des parfums, ou autres agents connus, introduits selon des quantités bien connues dans l'état de la technique.

Il est aussi possible d'introduire, dans la composition exfoliée selon l'invention, des charges pulvérulentes d'origine minérale ou organique, naturelles et/ou synthétiques.

Quand ces charges sont des matériaux minéraux pulvérulents, elles peuvent être choisies parmi des sels et/ou des oxydes minéraux ayant subi ou non un traitement de surface, tels que les carbonates de calcium, de magnésium, de zinc, la dolomie, la chaux, la magnésie, le trihydroxyde d'aluminium, l'alumine, des argiles et autres silico-alumineux, préférentiellement le talc, le kaolin, le mica, ou encore des matières minérales pulvérulentes synthétiques telles que les billes de verre par exemple.

Quand ces charges sont des matériaux pulvérulents organiques d'origine naturelle ou synthétique, elle peuvent être choisies dans le groupe constitué par les polymères naturels biodégradables, en particulier les glucides tels que des polysaccharides et, parmi eux, l'amidon, la cellulose sous forme de poudre de bois et/ou de fibres de cellulose, les colorants, les pigments, le noir de carbone, les poudres de polymères synthétiques, en particulier les poudres de polymères thermodurs et/ou thermoplastiques.

Toutes ces matières pulvérulentes d'origine minérale ou organique peuvent être mises en oeuvre seules ou en combinaison.

Les dimensions de ces matériaux minéraux ou organiques sont généralement comprises entre 0,01 et 300 µm et préférentiellement entre 0,1 et 100 µm.

Ces charges minérales et/ou organiques peuvent être introduites dans la composition selon l'invention à raison d'au plus 70% en poids et préférentiellement de 0,1% en poids à 50% en poids de la composition à exfolier.

### Etape b) du procédé

Selon l'invention, et conformément à l'étape du procédé, la formation du mélange visco-élastique par le travail thermomécanique de la composition à exfolier est assurée par l'introduction, dans une zone appropriée, des divers composants, intervenant dans la composition, sous la forme d'un mélange sec et pulvérulent de ces divers composants préalablement préparé ou encore sous la forme d'une introduction séparée de ces divers composants dans un ordre approprié comportant d'abord l'introduction du ou des composés polymères constituant la matrice, puis l'introduction des autres composants, dès lors que la matrice polymère a été chauffée et qu'elle peut avoir atteint au moins un état thermovisqueux suffisamment fluide pour recevoir les particules minérales lamellaires empilées à exfolier.

Dans cette zone appropriée, la vitesse de montée en température de la composition à exfolier est choisie de telle sorte que la matrice formée des composés polymères devienne rapidement thermovisqueuse en étant portée à la température de mise en oeuvre du composé polymère le plus visqueux entrant dans la composition de la matrice, cette température étant comprise dans l'intervalle délimité par la température de fusion Tf du composé polymère le moins fusible et/ou la température de transition vitreuse Tg du composé polymère le plus amorphe et la température de dégradation Tg des composés polymères formant la matrice.

L'énergie thermique apportée à la matrice polymère pour atteindre la température de mise en oeuvre est pour partie fournie par l'effet mécanique de cisaillement qui découle du malaxage de la composition à exfolier et pour l'autre partie, fournie par des moyens de chauffage et de régulation de ladite zone, de telle sorte que la formation du mélange visco-élastique se fasse sans choc thermique significatif et, dès lors, sans dégradation des composés polymères.

### Etape c) du procédé

Selon l'invention, et conformément à l'étape c) du procédé, le mélange visco-élastique issu de l'étape b) est soumis, dans une autre zone appropriée, à un travail thermomécanique impliquant compression et cisaillement significatif, ce mélange visco-élastique étant formé de la matrice polymère dans un état thermovisqueux et des particules minérales lamellaires empilées, préalablement traitées, à exfolier.

Ce mélange visco-élastique est souhaitablement maintenu à un niveau de température proche de celui pratiqué dans l'étape précédente, pendant qu'il est soumis au travail thermomécanique impliquant compression et cisaillement.

Ce travail thermomécanique a pour effet de provoquer une exfoliation incomplète, des particules minérales lamellaires empilées au sein de la matrice thermovisqueuse.

Le taux de cisaillement appliqué au mélange visco-élastique dans la zone de travail thermomécanique est au moins égal à 10⁴ seconde⁻¹ et préférentiellement compris entre 10⁴ seconde⁻¹ et 10⁷ seconde⁻¹.

Dès lors, le rapport entre le taux de cisaillement appliqué au mélange visco-élastique au cours de l'étape c) du procédé lors du travail thermomécanique dudit mélange impliquant compression et cisaillement significatif et le taux de cisaillement appliqué au mélange visco-élastique dans l'étape d) de relaxation est compris entre 1 et 10⁶.

La valeur de ce taux de cisaillement appliqué au mélange visco-élastique au cours de l'étape c) du procédé est choisi de telle sorte que les composés polymères constituant la matrice rendue thermovisqueuse n'aient pas à subir des chocs thermiques provoqués par un taux de cisaillement excessif entraînant des dégradations sensibles desdits composés polymères.

Le temps pendant lequel le mélange visco-élastique est soumis au travail thermomécanique impliquant une compression et un cisaillement significatif dépend simultanément des composés polymères constituant la matrice, du taux de cisaillement et de la température appliqués au mélange visco-élastique au cours de cette étape : ce temps peut être compris entre 5% et 30% du temps total de "passage machine", c'est-à-dire du temps total nécessaire à la réalisation des étapes (b) à (f) du procédé selon l'invention.

### Etape d) du procédé

Selon l'invention et conformément à l'étape d) du procédé, le mélange visco-élastique issu du travail thermomécanique impliquant compression et le cisaillement de l'étape c) est soumis à la relaxation, sous malaxage mécanique doux, à faible taux de cisaillement.

Comme précédemment évoqué, cette relaxation, qui constitue une caractéristique forte de l'invention, a la spécificité de provoquer l'exfoliation pratiquement complète des particules minérales lamellaires empilées, le taux d'exfoliation pouvant atteindre, à l'issue de l'étape de relaxation, une valeur d'au moins 0,96.

Les conditions essentielles de relaxation imposées simultanément au mélange visco-élastique issue de l'étape c) du procédé concernent :
- la température du mélange visco-élastique au cours de la relaxation qui est au moins égale mais qui peut être supérieure d'au moins 3°C et préférentiellement de 6°C à la température pratiquée lors de l'étape c) de travail thermomécanique impliquant compression et cisaillement dudit mélange visco-élastique ;
- le taux de cisaillement auquel est soumis le mélange visco-élastique qui est au plus égal au taux de cisaillement le plus faible pratiqué au cours de l'étape c) et qui est préférentiellement compris entre 10 seconde⁻¹ et 10⁴ seconde⁻¹ ;
- le temps de relaxation nécessaire pour obtenir une exfoliation quasi-complète des particules minérales lamellaires empilées qui est préférentiellement compris entre 3 et 10 fois, le temps pendant lequel le mélange visco-élastique a été soumis au travail thermomécanique impliquant compression et cisaillement au cours de l'étape c).

### Etape e) du procédé

Avant d'être transformé par extrusion en un matériau industriellement utilisable, le mélange visco-élastique doit avoir éliminé tous les composés rendus volatiles lors du chauffage de la composition à exfolier et de sa transformation en un mélange thermovisqueux.

L'élimination des composés rendus volatiles lors du chauffage peut se faire :
- naturellement quand la relaxation est conduite dans un mélangeur-malaxeur discontinu et ce, au cours des étapes c) et d) du procédé selon l'invention,
- dans une zone spécifique quand la relaxation est conduite dans un malaxeur continu de type extrudeuse, zone dans laquelle sont pratiqués à la fois un dégazage sous vide et un refroidissement du mélange visco-élastique, afin de placer ledit mélange à un niveau de viscosité propice à sa transformation en un matériau industriellement utilisable.

### Etape f) du procédé

Enfin, le mélange visco-élastique débarassé des composés volatiles est simultanément soumis à une compression et à un réglage de sa température de telle sorte que ce mélange visco-élastique soit placé dans les conditions thermiques permettant son extrusion et l'obtention d'un extrudat destiné à être utilisé dans la production d'articles selon les méthodes connues de la plasturgie.

Le procédé selon l'invention d'obtention de matériaux nanocomposites formés d'une matrice polymère thermoplastique et de nanocharges dispersées dans ladite matrice par exfoliation dans ladite matrice d'agglomérats de particules minérales lamellaires empilées peut être conduit aussi bien dans un malaxeur discontinu que dans un malaxeur continu.

Dans le cas où le procédé selon l'invention est conduit dans un malaxeur discontinu, les étapes b) à e) du procédé peuvent être pratiquées dans un dispositif tel que par exemple un Bamburys, un Brabenders, l'ultime étape b) de transformation du mélange visco-élastique dégazé en matériaux industriellement utilisables étant conduite dans un dispositif de formation de granulés, comme par exemple une extrudeuse.

Dans le cas où le procédé selon l'invention est conduit dans un malaxeur continu, les étapes b) à f) dudit procédé peuvent être pratiquées dans un dispositif tel que par exemple une extrudeuse.

Le malaxeur de type extrudeuse utilisé pour la production selon l'invention de matériaux thermoplastiques nanocomposites sous forme de produits d'extrusion, peut être de type, par exemple, MARIS, CLEXTRAL, WERNERPFLEIDERER, à double vis, corotative ou contrarotative, dont le fourreau est divisé en zones possédant chacune un système de chauffage et un système de refroidissement pour maîtriser correctement la température du mélange dans chaque zone.

La vitesse de rotation des vis du malaxeur est préférentiellement comprise entre 50 et 1200 tours par minute.

La composition thermoplastique nanocomposite exfoliée selon le procédé de l'invention peut être extrudée sous forme de produits d'extrusion refroidis, le refroidissement pouvant s'effectuer :
- par l'intermédiaire d'un fluide gazeux qui peut être de l'air,
- ou par un fluide liquide de refroidissement pouvant être de l'eau.

Par le procédé selon l'invention, il est possible de produire de façon reproductible des compositions thermoplastiques nanocomposites exfoliées destinées à être mises en oeuvre selon les techniques de la plasturgie dans la production d'articles, en particulier dans des applications structurales et les emballages à perméabilité, particulièrement faible, articles pour lesquels sont recherchées des caractéristiques améliorées, telles que une stabilité dimensionnelle sous effet thermique, la tenue aux chocs, au déchirement, à l'éclatement, à l'ignifugation, les barrières aux gaz dans des domaines aussi divers que l'emballage, en particulier alimentaire, le stockage de gaz, le domaine médical, chirurgical, pharmaceutique et para-pharmaceutique, le domaine de l'hygiène, de la cosmétique, et dans tous les domaines industriels utilisant des matériaux polymères, par exemple dans le domaine de la chimie, de l'aviation, de l'automobile, de la construction navale, ferroviaire, le bâtiment dans le domaine de l'espace, le domaine pétrolier, le domaine des sports, de la construction électrique, de l'électroménager, dans le domaine des jouets, et autres domaines sans limitation.

### Exemple

On a préparé, sous forme de granulés et selon le procédé de l'invention, un matériau thermoplastique nanocomposites par exfoliation de particules minérales lamellaires empilées dans une matrice polymère polyoléfinique placée dans un état physique thermovisqueux.

La formule de la composition à exfolier est la suivante, en % en poids :
- polypropylène homopolymère constituant la matrice ayant un grade 10 dont le point de transition Tg (ou de fusion Tf) est de 168°C : 75%
- Montmorillonite à exfolier, modifiée par des ions diméthyl ditallow ammonium : 5% pour la rendre organophile, commercialisée par la société Sud Chimie
- Polypropylène homopolymère : 20% ayant un grade (grade non mesurable car trop fluide), greffé par de l'anhydride maléique, à raison de 1,5% en poids, formant l'agent de compatibilité

L'extrudeuse mise en oeuvre est une extrudeuse MARIS, bi-vis, de type corotative de diamètre D = 40mm et de longueur 48D, dont la vitesse de rotation est de 200 t/mn.

Le fourreau de ladite extrudeuse est divisé en 12 zones comprenant parmi elles 5 zones principales d'action relatives aux étapes b) à f) du procédé selon l'invention.

Chacune des 12 zones possède un système de chauffage et un système de refroidissement par circulation d'eau et un système de régulation de la température.

Cette extrudeuse comporte :
- dans la première zone, une entrée des composés polymères thermoplastiques et de la montmorillonite à exfolier, préalablement traitée :
- dans les zones 2, 5 et 7, trois entrées latérales possibles pour des agents liquides,
- dans les zones 4 et 6, des entrées latérales possibles pour l'introduction de charges minérales, autres que la montmorillonite à exfolier,
- dans la zone 10, une sortie de dégazage sous vide,
- une filière montée en bout de vis, permettant une extrusion sous forme de joncs qui sont refroidis et granulés.

Les cinq zones principales d'action correspondant aux étapes b) à f) définies dans le cadre de l'invention, dans lesquelles les températures indiquées sont celles contrôlées en fourreau d'extrudeuse, sont les suivantes :
La zone principale d'alimentation correspondant à l'étape b) du procédé selon l'invention recouvre sensiblement les deux premières zones du fourreau.

La composition à exfolier comprenant, sous forme d'un mélange, le polypropylène homopolymère formant la matrice, l'argile montmorillonite traitée à exfolier et l'agent de compatibilité qui est le polypropylène homopolymère greffé au moyen d'anhydride maléique, est introduite en tête de l'extrudeuse comprimée, malaxée et montée en température de 80°C jusqu'à 210°C, c'est-à-dire à la température nécessaire pour transformer les composés polymères en un mélange thermovisqueux ayant aptitude à accueillir les agglomérats de montmorillonite à exfolier.

La zone principale de compression et de cisaillement correspondant à l'étape c) du procédé selon l'invention, recouvre en tout ou partie les zones 3, 4 et 5 du fourreau. Elle constitue la zone dans laquelle la composition à exfolier qui se trouve dans un état thermovisqueux, est soumis, à un travail thermomécanique comprenant une compression et un cisaillement significatif du mélange visco-élastique contenant les particules minérales lamellaires empilées en cours d'exfoliation.

Cette zone de compression et de cisaillement importants est équipée d'éléments mécaniques de malaxage, compression et cisaillement intense qui favorisent le mélange intime des divers composants et soumettent ce mélange visco-élastique à une action thermocisaillante forte provoquant en partie l'exfoliation des agglomérats de particules minérales lamellaires empilées.

Le taux de cisaillement appliqué au mélange visco-élastique est de 10⁷ seconde⁻¹,

La température est d'environ 210°C à l'extrémité amont et de 200°C à l'extrémité aval de la zone de compression et cisaillement,

Le temps de séjour de mélange visco-élastique dans ladite zone est de environ 10 secondes.
- La zone principale de relaxation correspondant à l'étape d) du procédé selon l'invention concerne en tout ou partie les zones 6, 7 et 8 du fourreau. Cette zone principale de relaxation qui reçoit le mélange visco-élastique soumis à une compression et cisaillement significatif dans la zone précédente, permet à ce mélange fortement travaillé par le cisaillement et la compression mécanique antérieurs, de se détendre en provoquant la désagrégation des agglomérats formés des empilements lamellaires minéraux exfoliables mais non encore exfoliés, et de libérer les particules minérales monolamellaires, ou feuillets, de dimensions nanométriques au sein de la matrice polymère dans laquelle ces particules sont dispersées de façon contrôlée.

Cette action de relaxation du mélange visco-élastique selon l'invention se fait sous une température contrôlée et réglée, qui évolue de 200°C dans la partie amont à environ 210°C dans la partie aval et sous un malaxage à faible taux de cisaillement, ce taux étant de 10³ seconde⁻¹.

Pour ce faire, la zone principale de relaxation est :
- munie de moyens mécaniques qui assurent l'action mécanique douce d'agitation-malaxage et le transfert physique du mélange, sans créer un phénomène de cisaillement significatif dont l'existence pourrait rompre l'état de relaxation du mélange visco-élastique nécessaire à l'obtention d'un nanocomposite, mélange visco-élastique au sein duquel l'exfoliation des charges minérales lamellaires se révèle être complète ;
- également munie de moyens de chauffage et de régulation thermique de telle sorte que le mélange visco-élastique soumis à la relaxation contrôlée soit placé et maintenu au niveau de température nécessaire à cette étape du traitement ;

La zone principale de dégazage correspondant à l'étape e) du procédé selon l'invention concerne tout ou partie de l'une ou l'autre des zones 9 et 10 du fourreau. Dans cette zone principale qui reçoit le mélange visco-élastique provenant de la zone principale de relaxation, la température du mélange visco-élastique est maintenue de son extrémité amont (200°C ou fourreau) à son extrémité aval (200°C au fourreau). Dans cette zone principale est effectué le dégazage sous vide du mélange visco-élastique relaxé, alors qu'il est en cours de transfert, afin d'en éliminer la fraction gazeuse, qui s'est formée dans les zones antérieures lors du travail thermomécanique du mélange visco-élastique soumis à compression et cisaillement significatifs, fraction gazeuse contenant de la vapeur d'eau, initialement présente par adsorption dans les divers matériaux mis en oeuvre et des produits de dégradation ou autres provenant du traitement préalable à leur exfoliation des particules minérales lamellaires à exfolier et des divers traitements de fonctionnalisation et/ou greffage des polymères.

La zone principale de compression et d'extrusion, correspondant à l'étape f) du procédé selon l'invention concerne les zones 11 et 12 du fourreau. Dans cette zone, le mélange visco-élastique relaxé puis dégazé est soumis à refroidissement supplémentaire pour lui donner la viscosité appropriée à son passage en filière. Le mélange visco-élastique y est soumis à une compression pour l'homogénéiser et le porter à la pression nécessaire à son extrusion. Dans cette zone, la température du fourreau est abaissée de 200°C (à l'entrée) à 190°C, de telle sorte que la température du mélange visco-élastique avant son extrusion est abaissée pour assurer son extrusion. Ainsi, le profil de température de la vis est de :

| Zone | 1 | 2 | 3 | 4 | 5 | 6 | 7 | 8 | 9 | 10 | 11 | 12 |
|---|---|---|---|---|---|---|---|---|---|---|---|---|
| Température du fourreau en °C | 80 | 210 | 210 | 200 | 200 | 200 | 210 | 200 | 200 | 200 | 190 | 190 |

La température de la filière au moment de l'extrusion est de 240°C. A la sortie de la filière, les joncs formés sont refroidis par passage dans un milieu aqueux maintenu à une température appropriée. Les joncs refroidis sont découpés en formant les granulés.

Les caractéristiques de fonctionnement de l'extrudeuse sont :
- vitesse de vis : 200 Tr / minute
- débit : 50 kg / heure

A titre de comparaison, une composition à exfolier, de même formulation que celle soumise au procédé de l'invention, est mise en oeuvre conformément à l'état de l'art dans la même extrudeuse MARIS, de même longueur de vis, de même vitesse de rotation, comportant 12 zones comprenant parmi elles 4 des 5 zones principales définies dans le cadre de l'invention, c'est-à-dire :
- la zone principale d'alimentation,
- la zone principale de compression et de cisaillement,
- la zone principale de dégazage,
- la zone principale de compression et d'extrusion,
la zone principale de relaxation définie dans le cadre de l'invention étant remplacée par une zone de malaxage, transport, compression et cisaillement.

Toutes les données techniques relatives au fonctionnement de chacune de ces zones communes au procédé de l'invention et au procédé issu de l'état de l'art sont identiques, à savoir compression, taux de cisaillement pratiqué, profil de température, temps de séjour, débit, les données techniques de fonctionnement de la zone de l'extrudeuse ayant remplacé la zone de relaxation étant les mêmes que celles pratiquées dans la zone principale de compression et de cisaillement.

A la sortie de la filière, les joncs formés sont refroidis par passage dans un milieu aqueux de refroidissement, maintenu à une température appropriée. Les joncs refroidis sont également transformés en granules.

Les matériaux thermoplastiques nanocomposites issus des procédés de l'invention et de l'état de l'art se présentant sous la forme de granulés ont été soumis à une analyse par diffractométrie aux rayons X pour contrôler le niveau d'exfoliation des particules minérales lamellaires au terme de la mise en oeuvre des procédés.

Pour ce faire, les matériaux thermoplastiques nanocomposites, issus du procédé de l'invention et de l'état de la technique, sont analysés au moyen d'un diffractomètre SIEMENS ® D500 équipé d'un goniomètre à géométrie BRAGG-BRENTANO. Un faisceau de rayons X est dirigé sur l'échantillon exposé à analyse et renvoyé par l'échantillon sous la forme d'un faisceau diffracté pour lequel l'angle de diffraction thêta du faisceau des rayons X est mesuré par rapport au faisceau incident.

Pour repérer tous les angles de diffraction, l'angle thêta est soumis à variation, l'angle réellement mesuré étant deux thêtas à raison de 0,60 degré par min par pas de 0,02 seconde.

Quand le faisceau de rayon X est diffracté, sa représentation (en abscisse angle 2 thêta et en ordonnée : intensité de diffraction) est un pic. Le balayage de l'échantillon au moyen de l'angle thêta fournit le diagramme de diffraction X.

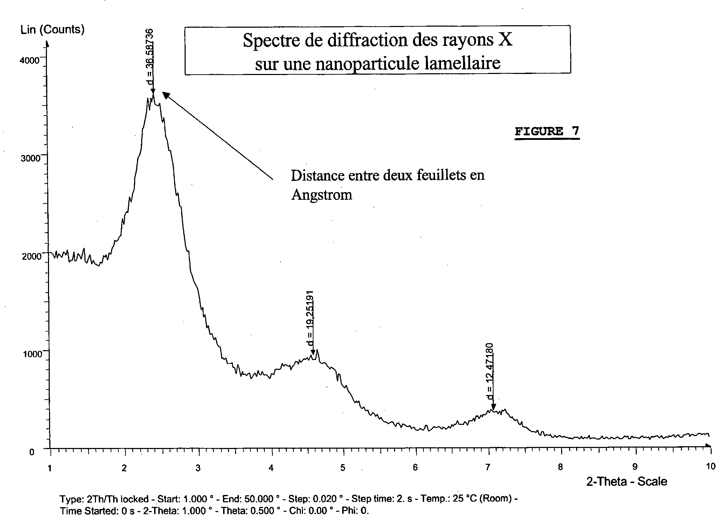

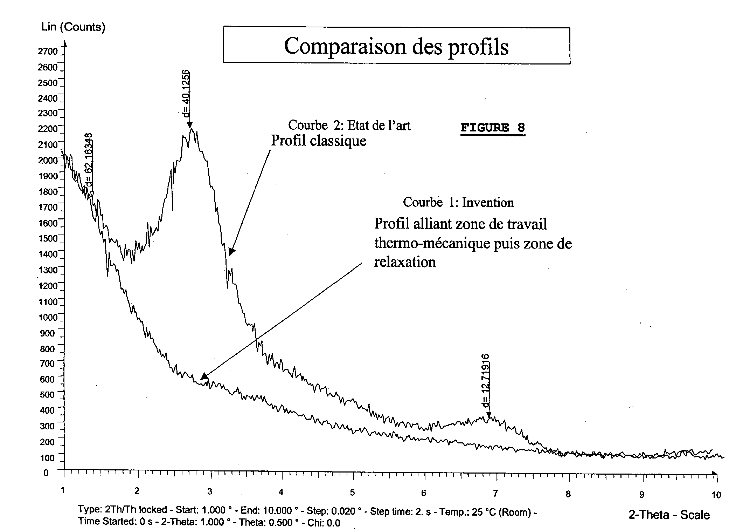

L'apparition d'un pic sur un diagramme révèle la présence, dans la matrice formée de composés polymères, d'agglomérats de particules minérales lamellaires empilées non exfoliés, constitués de lamelles ou feuillets dont la distance interstitielle est donnée par l'ordonnée du pic, c'est-à-dire par l'intensité de la diffraction (figure 7, figure 8 courbe 2).

L'absence de pic exprime l'absence d'agglomérats, c'est-à-dire une exfoliation complète des particules minérales lamellaires empilées, au cours du procédé selon l'invention : en d'autres termes, l'absence de pic exprime que les lamelles ou feuillets formant les agglomérats, avant exfoliation, ont été séparés par exfoliation et que les distances interstitielles entre les monolamelles (ou deux monofeuillets) sont au moins égales à 60 Angstrom pour que le diagramme soit exempt de pic.

Les figures 1 à 6 sont des documents photographique d'échantillons de matériaux thermoplastiques nanocomposites provenant de l'exfoliation de la composition précitée par le procédé selon l'invention (figures 1, 3 et 5) et par le procédé selon l'état de l'art (figures 2, 4 et 6).

Ces documents photographiques résultent de l'observation des échantillons issus de l'invention et de l'état de l'art par observation microscopique au moyen d'un microscope électronique en transmission selon un grossissement de 10000 à 130000 fois.

La comparaison des figures représentatives du procédé de l'invention (1, 3, 5) et du procédé selon l'état de l'art (2, 4, 6) révèle que :
- dans le cas du procédé selon l'invention (figures 1, 3, 5), les particules minérales lamellaires de montmorillonite apparaissent quasi-totalement monolamellaires ou quasi-totalement en monofeuillets ou feuillets isolés, montrant ainsi la complète efficacité de l'exfoliation par le procédé selon l'invention ;
- dans le cas du procédé selon l'état de l'art (figures 2, 4, 6), les particules minérales lamellaires de montmorillonite apparaissent mal exfoliées avec de nombreux agglomérats ou amas de feuillets très visibles.

Enfin, pour permettre de bien différencier le procédé selon l'invention du procédé de l'état de l'art, des spectres de diffraction des rayons X sur des échantillons avant exfoliation (figure 7), puis après exfoliation, tels que issus du procédé selon l'invention (figure 8, courbe 1) et du procédé de l'état de l'art (figure 8, courbe 2) sont donnés. Selon la courbe de la figure 7, il est patent que l'échantillon de matériaux minéraux lamellaires, préalablement traité, est chargé d'agglomérats dont la distance interlamellaire est de 36 Angstrom. La courbe de diffraction de la figure 7 concerne l'analyse d'agglomérats traités par un agent organo-ionique avant qu'ils soient soumis aux procédés d'exfoliation selon l'invention et selon l'état de la technique.

Les courbes de diffractions 1 et 2 de la figure 8, résultant de l'analyse au moyen du diffractomètre SIEMENS® D500 d'un échantillon provenant du procédé d'exfoliation selon l'invention (courbe 1) et d'un échantillon provenant du procédé d'exfoliation de l'état de la technique le plus proche (courbe 2) révèlent :
- concernant la courbe 1, l'excellente exfoliation des matériaux minéraux lamellaires, tels que la montmorillonite, obtenus par le procédé selon l'invention, la courbe 1 étant exempte de pics, exprimant ainsi que toutes les monolamelles ou monofeuillets après exfoliation ont une distance interstitielle 2 à 2 supérieure ou au plus égale à 60 Å, distance supérieure à celle que peut mesurer le dispositif utilisé ;
- concernant la courbe 2, l'incomplète exfoliation des matériaux minéraux lamellaires (montmorillonite) provenant du procédé de l'état de la technique, la courbe 2 possédant un pic qui révèle l'existence d'agglomérats non exfoliés provenant du procédé de l'état de la technique, l'ordonnée de ce pic donnant la distance interstitielle entre deux lamelles ou deux feuillets contigus qui est de 40 Angstrom.

## Revendications

1. Procédé d'obtention de matériaux nanocomposites formés d'une matrice polymère thermoplastique et de nanocharges minérales dispersées dans ladite matrice, ces nanocharges résultant de l'exfoliation d'agglomérats formés de particules minérales lamellaires empilées dans la matrice polymère placée, dans un état thermovisqueux, procédé consistant en :
(a) la mise en oeuvre d'une composition à exfolier, comprenant au moins un composé polymère thermoplastique pour former la matrice polymère, des particules minérales faites d'empilements minéraux lamellaires à exfolier, préalablement traitées au moyen d'un agent organo-ionique pour rendre ces particules minérales lamellaires organophiles, éventuellement au moins un agent de compatibilité pour rendre compatibles entre elles la matrice polymère et les particules minérales lamellaires traitées à exfolier ;
(b) la formation d'un mélange visco-élastique par malaxage et chauffage de la composition à exfolier par la mise dans un état visqueux des composés polymères présents dans ladite composition à une température au moins égale à la température de mise en oeuvre du composé polymère le plus visqueux, et simultanément par le malaxage des composés polymères avec les particules minérales lamellaires traitées à exfolier ;
(c) la soumission à un travail thermomécanique à l'état visqueux comprenant une compression et un cisaillement significatif du mélange visco-élastique contenant les particules minérales lamellaires empilées traitées à exfolier ;
(e) l'élimination des composés volatiles générés par le travail thermomécanique du mélange visco-élastique ;
(f) la transformation du mélange visco-élastique dégazé en un matériau industriellement utilisable ;
**caractérisé en ce que**, pour obtenir une exfoliation complète des particules minérales lamellaires traitées, et une dispersion contrôlée des particules minérales lamellaires élémentaires nanométriques résultant de l'exfoliation dans le mélange visco-élastique, (d) le mélange visco-élastique issu du travail thermomécanique de compression et de cisaillement de l'étape (c) est soumis à une relaxation sous malaxage mécanique doux, à faible taux de cisaillement, avant d'être transformé en un matériau industriellement utilisable.

2. Procédé selon la revendication 1, **caractérisé en ce que** les composés polymères thermoplastiques constituant la matrice polymère sont des homo- et/ou co-polymères thermoplastiques choisis dans le groupe constitué par les polyoléfines, les polystyrènes, les polyamides, les polyesters, les alcools polyvinyliques, les polyuréthanes, les polysiloxanes, greffés ou non, et les élastomères thermoplastiques, greffés ou non, choisis dans le groupe constitué par les élastomères oléfiniques, les élastomères styréniques, les élastomères polyesters, les élastomères polyuréthanes, les élastomères polysiloxanes.

3. Procédé selon l'une ou l'autre des revendications 1 et 2, **caractérisé en ce que** les composés polymères formant la matrice sont préférentiellement choisis dans le groupe constitué par les polyoléfines, greffées ou non, les élastomères, greffés ou non.

4. Procédé selon l'une quelconque des revendications 1 à 3, **caractérisé en ce que** les composés polymères formant la matrice sont préférentiellement choisis dans le groupe constitué par polyéthylène basse densité, le polyéthylène basse densité linéaire, le polyéthylène ultra-basse densité, le polyéthylène haute densité, le polyéthylène haute densité et haut poids moléculaire, le polyéthylène haute densité et ultra haut poids moléculaire, le polyéthylène moyenne densité, le polyéthylène métallocène, le polyisobutylène, le polybutène, le polyméthylpentène, le polyisoprène, le polybutadiène, les cyclooléfines, en particulier le cyclopentène ou norbornène, le polypropylène, les copolymères d'éthylène-propylène, les copolymères d'éthylène et d'α-oléfine en C₄ à C₁₀, les copolymères de propylène et d'α-oléfine en C₄ à C₁₀, les copolymères d'éthylène-propylène-diène (EPDM), les copolymères d'éthylène-propylène (EPR), copolymère d'éthylène-acétate de vinyle (EVA), les mélanges de copolymères avec un polymère, plus particulièrement polypropylene/copolymère d'éthylène-propylène, polyéthylène basse densité, copolymère d'acétate de vinyle, copolymères d'éthylène et d'esters acrylique et méthacrylique, de styrène-butadiène-styrène, de styrène-éthylène-butadiène-styrène, de styrène-propylène-styrène, de styrène-isoprène-styrène, des élastomères polysiloxanes.

5. Procédé selon l'une quelconque des revendications 1 à 4, **caractérisé en ce que** les composés polymères de la matrice sont greffés au moyen d'au moins un monomère fonctionnel, choisi dans le groupe constitué par l'anhydride maléique, l'anhydride itaconique, l'anhydride citraconique, les acides acrylique et méthacrylique, les esters acryliques et méthacryliques.

6. Procédé selon l'une quelconque des revendications 1 à 5, **caractérisé en ce que** les particules minérales lamellaires à exfolier sont d'origine naturelle ou synthétique.

7. Procédé selon l'une quelconque des revendications 1 à 6, **caractérisé en ce que** les particules minérales lamellaires à exfolier sont des argiles choisies dans les groupes constitués par le groupe des smectites, composé de la montmorillonite, la nontronite, la beidellite, la volkonskoite, l'hectorite, la saponite, la sanconite, la magadiite, et la kenyaite, le groupe de la vermiculite, le groupe des illites, en particulier la lédikite, le groupe des argiles chlorées, les chalcogénides.

8. Procédé selon la revendication 7, **caractérisé en ce que** les argiles en lamelles ou feuillets à exfolier ont une surface spécifique d'au moins 200 m²/g et préférentiellement comprise entre 300 m²/g et 800 m²/g.

9. Procédé selon la revendication 7, **caractérisé en ce que** les argiles en lamelles ou feuillets à exfolier, se présentant sous la forme d'agglomérats, ont un facteur de forme défini par le rapport de la plus grande dimension sur la plus petite dimension des agglomérats compris entre 1 et 1000.

10. Procédé selon l'une quelconque des revendications 1 à 9, **caractérisé en ce que** les particules minérales lamellaires à exfolier sont rendues organophiles par un traitement préalable à l'exfoliation au moyen d'un composé organo-ionique appartenant au groupe des composés organo-ammonium et organo-phosphonium, ce composé organo-ionique étant de l'un des types NH₃⁺R₁, NH₂⁺R₂R₃, P⁺R₄R₅R₆R₇, dans lesquels les radicaux R₁ à R₇ sont des chaînes hydrocarbonées ayant au moins quatre atomes de carbone.

11. Procédé selon l'une quelconque des revendications 1 à 10, **caractérisé en ce que** les particules minérales lamellaires à exfolier sont rendues organophiles par un traitement préalable à l'exfoliation au moyen d'un mélange de composés organo-ionique et organo-silane.

12. Procédé selon l'une ou l'autre des revendications 10 et 11, **caractérisé en ce que** la quantité de composés organo-ioniques mis en oeuvre varie entre 10 mmoles à 1000 mmoles, préférentiellement entre 20 mmoles et 200 mmoles, et très préférentiellement entre 80 mmoles à 120 mmoles, pour 100 g de particules minérales lamellaires empilées à traiter.

13. Procédé selon l'une quelconque des revendications 1 à 10, **caractérisé en ce que** l'agent de compatibilité présent dans la composition à exfolier est choisi dans le groupe constitué par les oligomères et/ou télomères fonctionnalisés par des groupements polaires, les polymères et/ou les copolymères et/ou les élastomères thermoplastiques fonctionnalisés par des groupements polaires et/ou greffés.

14. Procédé selon la revendication 13, **caractérisé en ce que** les oligomères et/ou télomères sont de structure chimique acrylique, méthacrylique, vinylique, styrénique ou diénique.

15. Procédé selon la revendication 13, **caractérisé en ce que** les polymères et/ou copolymères et/ou élastomères thermoplastiques fonctionnalisés par des groupements polaires sont choisis dans le groupe constitué par les composés polymères formant la matrice polymère.

16. Procédé selon l'une quelconque des revendications 1 à 15, **caractérisé en ce que** la quantité de particules minérales lamellaires empilées à exfolier, préalablement traitées, entrant dans la composition polymère, est d'au plus 60% en poids et préférentiellement comprise entre 0,2% en poids et 40% en poids du poids total de ladite composition.

17. Procédé selon l'une quelconque des revendications 1 à 16, **caractérisé en ce que** la quantité de l'agent de compatibilité susceptible d'entrer dans la composition polymère à exfolier est comprise entre 0% en poids et 40% en poids et préférentiellement comprise entre 2% en poids et 20% en poids de la masse des particules minérales lamellaires empilées à exfolier.

18. Procédé selon l'une quelconque des revendications 1 à 17, **caractérisé en ce que** un agent dispersant des particules minérales lamellaires à exfolier est introduit dans la composition.

19. Procédé selon la revendication 18, **caractérisé en ce que** l'agent dispersant est choisi dans le groupe constitué par les composés dont la structure chimique comporte au moins une fonction acide apportée par un groupement du type carboxylique, phosphorique, phosphonique, sulfurique, sulfonique, cette structure comportant également :
- de l'oxyde d'éthylène et/ou de l'oxyde de propylène dont le nombre cumulé de motifs de l'un et/ou de l'autre est choisi dans l'intervalle allant de 1 à 300,
- un groupement R qui peut être un groupe alkyl saturé ou non, linéaire ou non, un groupe aryl, un hétérocycle saturé ou non, chaque groupe ayant un nombre d'atomes de carbone au plus égal à 28C et souhaitablement choisi dans l'intervalle de 8 à 24C, un groupe stéroïde, le groupement R pouvant avoir au moins une fonction du type -OH, -COOH, -COOR, -NH₂, -CO-NH₂, -CN,
- un groupement R' qui peut être de l'hydrogène ou une chaîne carbonée ayant un nombre de carbone au plus égale à 28C et préférentiellement comprise entre 1 et 4C.

20. Procédé selon l'une quelconque des revendications 18 et 19, **caractérisé en ce que** la concentration en cet agent dispersant est comprise entre 0,01% en poids et 1% en poids, et préférentiellement de 0,1% en poids à 0,6% en poids de la masse des particules minérales lamellaires empilées à exfolier introduite dans la composition.

21. Procédé selon l'une quelconque des revendications 1 à 20, **caractérisé en ce que** d'autres agents, qui sont des stabilisants thermiques, photochimiques, des anti-oxydants, des antistatiques, des lubrifiants, des ignifugeants, des colorants, des arômes, des parfums, sont introduits dans la composition à exfolier.

22. Procédé selon l'une quelconque des revendications 1 à 21, **caractérisé en ce que** des charges pulvérulentes, d'origine minérale, organique, naturelle et/ou synthétique, sont introduites dans la composition.

23. Procédé selon la revendication 22, **caractérisé en ce que** les charges sont des matériaux minéraux pulvérulents choisies parmi des sels et/ou des oxydes minéraux ayant subi ou non un traitement de surface appartenant au groupe constitué par les carbonates de calcium, de magnésium, de zinc, la dolomie, la chaux, la magnésie, le trihydroxyde d'aluminium, l'alumine, des argiles et autres silico-alumineux, en particulier le talc, le kaolin, le mica, les billes de verre.

24. Procédé selon la revendication 22, **caractérisé en ce que** les charges organiques d'origine naturelle ou synthétique sont choisies dans le groupe constitué par les polymères naturels biodégradables, en particulier les glucides, l'amidon, la cellulose sous forme de poudre de bois et/ou de fibres de cellulose, les colorants, les pigments, le noir de carbone, les poudres de polymères synthétiques thermodurs et/ou thermoplastiques.

25. Procédé selon l'une quelconque des revendications 22 à 24, **caractérisé en ce que** les charges pulvérulentes ont des dimensions comprises entre 0,01 et 300 µm et préférentiellement entre 0,1 et 100 µm.

26. Procédé selon l'une quelconque des revendications 22 à 24, **caractérisé en ce que** les charges minérales et/ou organiques sont introduites dans la composition à raison d'au plus 70% en poids et préférentiellement de 0,1 % en poids à 50% en poids de la composition.

27. Procédé selon l'une quelconque des revendications 1 à 26, **caractérisé en ce que** la composition à exfolier est transformée en un mélange visco-élastique par malaxage et chauffage à une température de mise en oeuvre du composé polymère le plus visqueux entrant dans ladite composition, puis est soumis à un travail thermo-mécanique impliquant compression et cisaillement, le taux de cisaillement appliqué au mélange visco-élastique pendant le travail thermomécanique étant au moins égal à 10⁴ seconde⁻¹ et préférentiellement compris entre 10⁴ seconde⁻¹ et 10⁷ seconde⁻¹.

28. Procédé selon l'une quelconque des revendications 1 à 27, **caractérisé en ce que** le temps pendant lequel le mélange visco-élastique est soumis au travail thermomécanique impliquant une compression et un cisaillement de l'étape (c) est compris entre 5% et 30% du temps total nécessaire à la réalisation des étapes (b) à (f) dudit procédé.

29. Procédé selon l'une quelconque des revendications 1 à 28, **caractérisé en ce que** le mélange visco-élastique issu du travail thermo-mécanique impliquant compression et cisaillement est soumis à une relaxation sous malaxage mécanique doux dont le taux de cisaillement est au plus égal à 10⁴ seconde⁻¹ et préférentiellement compris entre 10 secondes⁻¹ et 10⁴ seconde⁻¹.

30. Procédé selon l'une quelconque des revendications 1 à 29, **caractérisé en ce que** la température du mélange visco-élastique au cours de la relaxation est au moins égale, et préférentiellement supérieure d'au moins 3°C, et très préférentiellement supérieure de 6°C à la température pratiquée dans l'étape (c) de travail thermomécanique impliquant compression et cisaillement.

31. Procédé selon l'une quelconque des revendications 1 à 30, **caractérisé en ce que** le temps de relaxation nécessaire pour parvenir à une exfoliation quasi-complète des particules minérales lamellaires empilées est préférentiellement compris entre 3 et 10 fois, le temps pendant lequel le mélange visco-élastique a été soumis au travail thermomécanique de l'étape (c) impliquant compression et cisaillement.

32. Procédé selon l'une quelconque des revendications 1 à 31, **caractérisé en ce qu'**il est conduit dans un malaxeur discontinu ou dans un malaxeur continu de type extrudeuse.

33. Procédé selon l'une quelconque des revendications 1 à 32, **caractérisé**
**en ce que**, quand il est conduit dans un malaxeur de type extrudeuse à double vis, dont le fourreau est divisé en zones possédant chacune un
système de chauffage et un système de refroidissement, la relaxation de l'étape (d) s'effectue dans au moins une zone de relaxation placée après la zone de travail thermomécanique de l'étape (c) comprenant compression et cisaillement, cette au moins une zone de relaxation ayant une longueur totale cumulée comprise entre 8% et 40%, et préférentiellement entre 8% et 25%, de la longueur totale des vis.

34. Procédé selon l'une quelconque des revendications 1 à 33, **caractérisé en ce que** l'origine de au moins une zone de relaxation du mélange visco-élastique dans un malaxeur de type extrudeuse se situe à une distance exprimée en pourcentage par rapport à la longueur totale des vis comprise entre 30% et 70% de l'extrémité amont de ladite vis.

35. Procédé selon l'une quelconque des revendications 1 à 34, **caractérisé en ce que**, quand il est conduit dans un malaxeur continu de type extrudeuse, la vitesse de rotation des vis est comprise entre 50 et 1200 tours par minute.

36. Matériaux thermoplastiques nanocomposites obtenus selon l'une quelconque des revendications 1 à 35.

37. Utilisation des matériaux thermoplastiques nanocomposites selon la revendication 36, dans les domaines de l'emballage, du stockage des liquides et gaz, des revêtement, et plus particulièrement les domaines médicaux, paramédicaux, pharmaceutiques, para-pharmaceutiques, de l'hygiène, de la cosmétique, du pétrole, de la construction électrique, électroménager, les jouets, la construction automobile, navale, aérienne, ferroviaire, le bâtiment, le domaine de l'espace.

## Patentansprüche

1. Verfahren zur Herstellung von Nanoverbundwerkstoffen, die aus einer thermoplastischen Polymermatrix und aus mineralischen Nanofüllstoffen, die in der Matrix dispergiert sind, gebildet werden, wobei diese Nanofüllstoffe aus der Exfolierung von Agglomeraten resultieren, die aus geschichteten, lamellaren, mineralischen Partikeln in der Polymermatrix, die sich in einem thermoviskosen Zustand befindet, gebildet sind, Verfahren bestehend aus:
(a) der Verwendung einer zu exfolierenden Zusammensetzung, die mindestens eine thermoplastische Polymerverbindung zur Bildung der Polymermatrix, zu exfolierende mineralische Partikel, gefertigt aus lamellaren mineralischen Schichtungen, die zuvor mit Hilfe eines organischen Ionenmittels behandelt werden, um diese lamellaren, mineralischen Partikel organophil zu machen, und eventuell mindestens ein Kompatibilitätsmittel beinhaltet, um die Polymermatrix und die zu exfolierenden, behandelten, lamellaren, mineralischen Partikel untereinander kompatibel zu machen;
(b) der Bildung eines viskoelastischen Gemischs durch Kneten und Erwärmen der zu exfolierenden Zusammensetzung durch das Versetzen der in der Zusammensetzung vorhandenen Polymerverbindungen in einen viskosen Zustand auf eine Temperatur, die mindestens gleich der Verwendungstemperatur der Polymerverbindung mit der höchsten Viskosität ist, und gleichzeitig durch das Kneten der Polymerverbindungen mit den zu exfolierenden, behandelten, lamellaren, mineralischen Partikeln;
(c) der Unterziehung des viskoelastischen Gemischs, das die zu exfolierenden, behandelten, geschichteten, lamellaren, mineralischen Partikel enthält, einer thermomechanischen Bearbeitung im viskosen Zustand, die einen Komprimiervorgang und einen bedeutsamen Schervorgang beinhaltet;
(e) der Eliminierung der flüchtigen Verbindungen, die durch die thermomechanische Bearbeitung des viskoelastischen Gemischs entstanden sind;
(f) der Verarbeitung des entgasten, viskoelastischen Gemischs in einen industriell nutzbaren Werkstoff;
**dadurch gekennzeichnet, dass** zum Herstellen einer vollständigen Exfolierung der behandelten, lamellaren, mineralischen Partikel und einer kontrollierten Dispersion der nanometrischen, einzelnen, lamellaren, mineralischen Partikel, die aus der Exfolierung in dem viskoelastischen Gemisch resultieren, (d) das viskoelastische Gemisch, das aus der thermomechanischen Bearbeitung mit Komprimier- und Schervorgang des Schritts (c) hervorgeht, einer Relaxation durch sanftes mechanisches Kneten bei niedriger Scherrate unterzogen wird, bevor es zu einem industriell nutzbaren Werkstoff verarbeitet wird.

2. Verfahren gemäß Anspruch 1, **dadurch gekennzeichnet, dass** die thermoplastischen Polymerverbindungen, aus denen die Polymermatrix besteht, thermoplastische Homo-und/oder Copolymere, die aus der Gruppe gewählt werden, die aus Polyolefinen, Polystyrolen, Polyamiden, Polyestern, Polyvinylalkoholen, Polyurethanen, Polysiloxanen, gepfropft oder ungepfropft, besteht, und thermoplastische Elastomere, gepfropft oder ungepfropft, die aus der Gruppe gewählt werden, die aus Olefin-Elastomeren, Styrol-Elastomeren, Polyester-Elastomeren, Polyurethan-Elastomeren, Polysiloxan-Elastomeren besteht, sind.

3. Verfahren gemäß einem der Ansprüche 1 oder 2, **dadurch gekennzeichnet, dass** die Polymerverbindungen, die die Matrix bilden, vorzugsweise aus der Gruppe gewählt werden, die aus Polyolefinen, gepfropft oder ungepfropft, Elastomeren, gepfropft oder ungepfropft, besteht.

4. Verfahren gemäß irgendeinem der Ansprüche 1 bis 3, **dadurch gekennzeichnet, dass** die Polymerverbindungen, die die Matrix bilden, vorzugsweise aus der Gruppe gewählt werden, die aus Folgendem besteht: Polyethylen niedriger Dichte, linearem Polyethylen niedriger Dichte, Polyethylen sehr niedriger Dichte, Polyethylen hoher Dichte, Polyethylen hoher Dichte und hoher Molmasse, Polyethylen hoher Dichte und sehr hoher Molmasse, Polyethylen mittlerer Dichte, Metallocen-Polyethylen, Polyisobutylen, Polybuten, Polymethylpenten, Polyisopren, Polybutadien, Cycloolefinen, insbesondere Cyclopenten oder Norbornen, Polypropylen, Ethylen-Propylen-Copolymeren, Copolymeren aus Ethylen und C₄-bis-C₁₀-α-Olefin, Copolymeren aus Propylen und C₄-bis-C₁₀-α-Olefin, Ethylen-Propylen-Dien-Copolymeren (EPDM), Ethylen-Propylen-Copolymeren (EPR), Ethylen-Vinylacetat-Copolymer (EVA), Gemischen von Copolymeren mit einem Polymer, im Besonderen Polypropylen/Ethylen-Propylen-Copolymer, Polyethylen niedriger Dichte, Vinylacetat-Copolymer, Copolymeren aus Ethylen und Acryl- und Methacrylester, aus Styrol-Butadien-Styrol, aus Styrol-Ethylen-Butadien-Styrol, aus Styrol-Propylen-Styrol, aus Styrol-Isopren-Styrol, Polysiloxan-Elastomeren.

5. Verfahren gemäß irgendeinem der Ansprüche 1 bis 4, **dadurch gekennzeichnet, dass** die Polymerverbindungen der Matrix mit Hilfe von mindestens einem funktionellen Monomer gepfropft werden, das aus der Gruppe gewählt wird, die aus Maleinsäureanhydrid, Itaconanhydrid, Citraconanhydrid, Acryl- und Methacrylsäure, Acryl- und Methacrylester besteht.

6. Verfahren gemäß irgendeinem der Ansprüche 1 bis 5, **dadurch gekennzeichnet, dass** die zu exfolierenden, lamellaren, mineralischen Partikel natürlichen oder synthetischen Ursprungs sind.

7. Verfahren gemäß irgendeinem der Ansprüche 1 bis 6, **dadurch gekennzeichnet, dass** die zu exfolierenden, lamellaren, mineralischen Partikel Tone sind, die aus den Gruppen gewählt werden, die aus der Gruppe der Smektite, zusammengesetzt aus Montmorillonit, Nontronit, Beidellit, Volkonskoit, Hectorit, Saponit, Sankonit, Magadiit und Kenyait, der Vermikulitgruppe, der Gruppe der Illite, insbesondere Ledikit, der Gruppe der chlorhaltigen Tone, Chalcogeniden bestehen.

8. Verfahren gemäß Anspruch 7, **dadurch gekennzeichnet, dass** die zu exfolierenden Tone mit Lamellen- oder Blätterstruktur eine spezifische Oberfläche von mindestens 200 m²/g und vorzugsweise von zwischen 300 m²/g und 800 m²/g aufweisen.

9. Verfahren gemäß Anspruch 7, **dadurch gekennzeichnet, dass** die zu exfolierenden Tone mit Lamellen- oder Blätterstruktur, die in Form von Agglomeraten auftreten, einen Formfaktor, der als das Verhältnis der größten Abmessung zur kleinsten Abmessung der Agglomerate definiert ist, von zwischen 1 und 1000 aufweisen.

10. Verfahren gemäß irgendeinem der Ansprüche 1 bis 9, **dadurch gekennzeichnet, dass** die zu exfolierenden, lamellaren, mineralischen Partikel durch eine Behandlung vor der Exfolierung mit Hilfe einer organischen Ionenverbindung, die zur Gruppe der organischen Ammonium- und organischen Phosphoniumverbindungen gehört, organophil gemacht werden, wobei diese organische Ionenverbindung eine von den Arten NH₃⁺R₁, NH₂⁺R₂R₃, P⁺R₄R₅R₆R₇ ist, in denen die Radikale R₁ bis R₇ Kohlenwasserstoffketten sind, die mindestens vier Kohlenstoffatome aufweisen.

11. Verfahren gemäß irgendeinem der Ansprüche 1 bis 10, **dadurch gekennzeichnet, dass** die zu exfolierenden, lamellaren, mineralischen Partikel durch eine Behandlung vor der Exfolierung mit Hilfe eines Gemischs aus organischen lonen- und organischen Silanverbindungen organophil gemacht werden.

12. Verfahren gemäß einem der Ansprüche 10 oder 11, **dadurch gekennzeichnet, dass** die verwendete Menge an organischen Ionenverbindungen zwischen 10 mmol bis 1000 mmol, vorzugsweise zwischen 20 mmol und 200 mmol und äußerst vorzugsweise zwischen 80 mmol und 120 mmol auf 100 g zu behandelnder, geschichteter, lamellarer, mineralischer Partikel schwankt.

13. Verfahren gemäß irgendeinem der Ansprüche 1 bis 10, **dadurch gekennzeichnet, dass** das in der zu exfolierenden Zusammensetzung vorhandene Kompatibilitätsmittel aus der Gruppe gewählt wird, die aus Oligomeren und/oder Telomeren, die durch polare Gruppen funktionalisiert sind, Polymeren und/oder Copolymeren und/oder thermoplastischen Elastomere, die durch polare Gruppen funktionalisiert und/oder gepfropft sind, besteht.

14. Verfahren gemäß Anspruch 13, **dadurch gekennzeichnet, dass** die Oligomere und/oder Telomere über eine chemische Acryl-, Methacryl-, Vinyl-, Styrol- oder Dien-Struktur verfügen.

15. Verfahren gemäß Anspruch 13, **dadurch gekennzeichnet, dass** die Polymere und/oder Copolymere und/oder thermoplastischen Elastomere, die durch polare Gruppen funktionalisiert sind, aus der Gruppe gewählt werden, die aus den Polymerverbindungen besteht, die die Polymermatrix bilden.

16. Verfahren gemäß irgendeinem der Ansprüche 1 bis 15, **dadurch gekennzeichnet, dass** die Menge an zuvor behandelten, zu exfolierenden, geschichteten, lamellaren, mineralischen Partikeln, die in die Polymerverbindungen gelangen, bei höchstens 60 Gew.-% und vorzugsweise zwischen 0,2 Gew.-% und 40 Gew.-% des Gesamtgewichts der Zusammensetzung liegt.

17. Verfahren gemäß irgendeinem der Ansprüche 1 bis 16, **dadurch gekennzeichnet, dass** die Menge an Kompatibilitätsmittel, die in die zu exfolierende Polymerverbindung gelangen kann, zwischen 0 Gew.-% und 40 Gew.-% und vorzugsweise zwischen 2 Gew.-% und 20 Gew.-% der Masse der zu exfolierenden, geschichteten, lamellaren, mineralischen Partikel liegt.

18. Verfahren gemäß irgendeinem der Ansprüche 1 bis 17, **dadurch gekennzeichnet, dass** der Zusammensetzung ein Mittel zur Dispersion der zu exfolierenden, lamellaren, mineralischen Partikel zugegeben wird.

19. Verfahren gemäß Anspruch 18, **dadurch gekennzeichnet, dass** das Mittel zur Dispersion aus der Gruppe gewählt wird, die aus Verbindungen besteht, deren chemische Struktur mindestens eine funktionelle Säuregruppe umfasst, die durch eine Gruppe des Carboxyl-, Phosphor-, Phosphon-, Sulfid-, Sulfontyps bereitgestellt wird, wobei diese Struktur ebenfalls Folgendes umfasst:
- Ethylenoxid und/oder Propylenoxid, wobei die jeweils von dem einen und/oder dem anderen kumulierte Zahl an Struktureinheiten in dem von 1 bis 300 gehenden Intervall gewählt wird,
- eine R-Gruppe, die eine gesättigte oder ungesättigte, lineare oder nicht lineare Alkylgruppe, eine Arylgruppe, eine gesättigte oder ungesättigte heterozyklische Verbindung, wobei jede Gruppe eine Zahl an Kohlenstoffatomen aufweist, die höchstens gleich 28C ist und wünschenswerterweise in dem Intervall von 8 bis 24C gewählt wird, eine Steroidgruppe sein kann, wobei die R-Gruppe mindestens eine funktionelle Gruppe von der Art -OH, -COOH, -COOR, -NH₂, -CO-NH₂, -CN aufweisen kann,
- eine R'-Gruppe, die Wasserstoff oder eine Kohlenstoffkette sein kann, die eine Kohlenstoffzahl aufweist, die höchstens gleich 28C ist und vorzugsweise zwischen 1 und 4C liegt.

20. Verfahren gemäß irgendeinem der Ansprüche 18 und 19, **dadurch gekennzeichnet, dass** die Konzentration dieses Dispersionsmittels zwischen 0,01 Gew.-% und 1 Gew.-% und vorzugsweise von 0,1 Gew.-% bis 0,6 Gew.-% der Masse der zu exfolierenden, geschichteten, lamellaren, mineralischen Partikel liegt, die der Zusammensetzung zugegeben werden.

21. Verfahren gemäß irgendeinem der Ansprüche 1 bis 20, **dadurch gekennzeichnet, dass** weitere Mittel, die thermische, photochemische Stabilisatoren, Antioxidantien, Antistatika, Schmierstoffe, feuerhemmende Stoffe, Farbstoffe, Aromen, Duftstoffe sind, der zu exfolierenden Zusammensetzung zugegeben werden.

22. Verfahren gemäß irgendeinem der Ansprüche 1 bis 21, **dadurch gekennzeichnet, dass** der Zusammensetzung pulverförmige Füllstoffe mineralischen, organischen, natürlichen und/oder synthetischen Ursprungs zugegeben werden.

23. Verfahren gemäß Anspruch 22, **dadurch gekennzeichnet, dass** die Füllstoffe pulverförmige, mineralische Werkstoffe sind, die aus Salzen und/oder aus mineralischen Oxiden gewählt werden, die einer Oberflächenbehandlung unterworfen worden sind oder nicht, die zu der Gruppe gehören, die aus Calcium-, Magnesium-, Zinkcarbonaten, Dolomit, Kalk, Magnesia, Aluminiumtrihydroxyd, Aluminiumoxid, Tonen und anderen Aluminiumsilikaten, insbesondere Talk, Kaolin, Glimmer, Glaskugeln, besteht.

24. Verfahren gemäß Anspruch 22, **dadurch gekennzeichnet, dass** die organischen Füllstoffe natürlichen oder synthetischen Ursprungs aus der Gruppe gewählt werden,
die aus biologisch abbaubaren, natürlichen Polymeren, insbesondere Kohlenhydraten, Stärke, Zellulose in Form von Holzpulver und/oder Zellulosefasern, Farbstoffen, Pigmenten, Kohlenschwarz, Pulvern aus thermoduren und/oder thermoplastischen synthetischen Polymeren besteht.

25. Verfahren gemäß irgendeinem der Ansprüche 22 bis 24, **dadurch gekennzeichnet, dass** die pulverförmigen Füllstoffe Abmessungen zwischen 0,01 und 300 µm und vorzugsweise zwischen 0,1 und 100 µm aufweisen.

26. Verfahren gemäß irgendeinem der Ansprüche 22 bis 24, **dadurch gekennzeichnet, dass** die mineralischen und/oder organischen Füllstoffe der Zusammensetzung in Höhe von höchstens 70 Gew.-% und vorzugsweise von 0,1 Gew.-% bis 50 Gew.-% der Zusammensetzung zugegeben werden.

27. Verfahren gemäß einem der Ansprüche 1 bis 26, **dadurch gekennzeichnet, dass** die zu exfolierende Zusammensetzung durch Kneten und Erwärmen auf eine Verwendungstemperatur der Polymerverbindung mit der höchsten Viskosität, die in die Zusammensetzung gelangt, zu einem viskoelastischen Gemisch verarbeitet wird und dann einer thermomechanischen Bearbeitung, die Komprimier- und Schervorgänge einschließt, unterzogen wird, wobei die während der thermomechanischen Bearbeitung auf das Gemisch angewandte Scherrate mindestens gleich 10⁴ Sekunde⁻¹ ist und vorzugsweise zwischen 10⁴ Sekunde⁻¹ und 10⁷ Sekunde⁻¹ liegt.

28. Verfahren gemäß irgendeinem der Ansprüche 1 bis 27, **dadurch gekennzeichnet, dass** die Dauer, für die das viskoelastische Gemisch der thermomechanischen Bearbeitung des Schritts (c), die einen Komprimier- und einen Schervorgang einschließt, unterzogen wird, zwischen 5 % und 30 % der Gesamtdauer liegt, die für die Realisierung der Schritte (b) bis (f) des Verfahrens notwendig ist.

29. Verfahren gemäß irgendeinem der Ansprüche 1 bis 28, **dadurch gekennzeichnet, dass** das viskoelastische Gemisch, das aus der thermomechanischen Bearbeitung, die Komprimier- und Schervorgänge einschließt, hervorgeht, einer Relaxation unter sanftem mechanischem Kneten unterzogen wird, dessen Scherrate höchstens gleich 10⁴ Sekunde⁻¹ ist und vorzugsweise zwischen 10 Sekunden⁻¹ und 10⁴ Sekunde⁻¹ liegt.

30. Verfahren gemäß irgendeinem der Ansprüche 1 bis 29, **dadurch gekennzeichnet, dass** die Temperatur des viskoelastischen Gemischs im Verlauf der Relaxation mindestens gleich und vorzugsweise mindestens um 3 °C höher und äußerst vorzugsweise um mehr als 6 °C höher als die Temperatur ist, die bei dem Schritt (c) der thermomechanischen Bearbeitung, die Komprimier- und Schervorgänge einschließt, eingesetzt wird.

31. Verfahren gemäß irgendeinem der Ansprüche 1 bis 30, **dadurch gekennzeichnet, dass** die Relaxationsdauer, die notwendig ist, um eine quasi vollständige Exfolierung der geschichteten, lamellaren, mineralischen Partikel zu erzielen, vorzugsweise zwischen 3 und 10 Mal länger ist als die Dauer, während der das viskoelastische Gemisch der thermomechanischen Bearbeitung des Schritts (c), die Komprimier- und Schervorgänge einschließt, unterzogen worden ist.

32. Verfahren gemäß irgendeinem der Ansprüche 1 bis 31, **dadurch gekennzeichnet, dass** es in einem diskontinuierlichen Kneter oder in einem kontinuierlichen Kneter von der Art eines Extruders durchgeführt wird.

33. Verfahren gemäß irgendeinem der Ansprüche 1 bis 32, **dadurch gekennzeichnet, dass**, wenn es in einem Kneter von der Art eines Zweischneckenextruders durchgeführt wird, dessen Gehäuse in Bereiche unterteilt ist, die jeweils über ein Erwärmungssystem und ein Kühlsystem verfügen, die Relaxation des Schritts (d) in mindestens einem Relaxationsbereich erfolgt, der hinter dem Bereich der thermomechanischen Bearbeitung des Schritts (c), der Komprimier- und Schervorgänge beinhaltet, platziert ist, wobei dieser mindestens eine Relaxationsbereich eine kumulierte Gesamtlänge zwischen 8 % und 40 % und vorzugsweise zwischen 8 % und 25 % der Gesamtlänge der Schnecken aufweist.

34. Verfahren gemäß irgendeinem der Ansprüche 1 bis 33, **dadurch gekennzeichnet, dass** sich der Ursprung von mindestens einem Relaxationsbereich des viskoelastischen Gemischs in einem Kneter von der Art eines Extruders in einer Entfernung, ausgedrückt in Prozent im Verhältnis zu der Gesamtlänge der Schnecken, zwischen 30 % und 70 % von dem stromaufwärts gelegenen Ende der Schnecke befindet.

35. Verfahren gemäß irgendeinem der Ansprüche 1 bis 34, **dadurch gekennzeichnet, dass**, wenn es in einem kontinuierlichen Kneter von der Art eines Extruders durchgeführt wird, die Rotationsgeschwindigkeit der Schnecken zwischen 50 und 1200 Umdrehungen in der Minute liegt.

36. Thermoplastische Nanoverbundwerkstoffe, die gemäß irgendeinem der Ansprüche 1 bis 35 hergestellt werden.

37. Benutzung der thermoplastischen Nanoverbundwerkstoffe gemäß Anspruch 36 in den Bereichen Verpackung, Lagerung von Flüssigkeiten und Gasen, Beschichtung und im Besonderen in den Bereichen Medizin, Paramedizin, Pharmazeutik, Parapharmazeutik, Hygiene, Kosmetik, Erdöl, Elektrotechnik, elektrische Haushaltsgeräte, Spielsachen, Automobil-, Schiffs-, Luftfahrzeug-, Eisenbahnindustrie, Bauwesen und dem Bereich Raumfahrt.

## Claims

1. A method of obtaining nanocomposite materials formed of a thermoplastic polymer matrix and mineral nanofillers dispersed in said matrix, these nanofillers resulting from the exfoliation of agglomerates formed of stacked laminar mineral particles in the polymer matrix placed in a thermoviscous state, method consisting in:
(a) using a composition to be exfoliated, comprising at least one thermoplastic polymer compound to form the polymer matrix, mineral particles made of laminar mineral stacks to be exfoliated, previously treated by means of an organo-ionic agent to make these laminar mineral particles organophilic, potentially at least one compatibility agent to make the polymer matrix and the treated laminar mineral particles to be exfoliated compatible with one another;
(b) forming a visco-elastic mixture by kneading and heating the composition to be exfoliated by putting into a viscous state the polymer compounds present in said composition at a temperature at least equal to the use temperature of the most viscous polymer compound, and simultaneously by kneading the polymer compounds with the treated laminar mineral particles to be exfoliated;
(c) the submission of the visco-elastic mixture containing the treated stacked laminar mineral particles to be exfoliated to thermomechanical working in the viscous state comprising compression and significant shearing;
(e) the elimination of the volatile compounds generated by the thermomechanical working of the visco-elastic mixture;
(f) the transformation of the degassed visco-elastic mixture into an industrially useable material;
**characterised in that**, to obtain a complete exfoliation of the treated laminar mineral particles, and a controlled dispersion of the nanometric elementary laminar mineral particles resulting from the exfoliation in the visco-elastic mixture, (d) the visco-elastic mixture coming from the compression and shearing thermomechanical working of step (c) is subjected to a relaxation under gentle mechanical kneading, at low shearing rate, before being transformed into an industrially useable material.

2. The method according to claim 1, **characterised in that** the thermoplastic polymer compounds constituting the polymer matrix are thermoplastic homopolymers and/or copolymers selected from the group constituted by polyolefins, polystyrenes, polyamides, polyesters, polyvinyl alcohols, polyurethanes, polysiloxanes, grafted or ungrafted, and thermoplastic elastomers, grafted or ungrafted, selected from the group constituted by olefin elastomers, styrene elastomers, polyester elastomers, polyurethane elastomers, polysiloxane elastomers.

3. The method according to one or other of claims 1 and 2, **characterised in that** the polymer compounds forming the matrix are preferentially selected from the group constituted by grafted or ungrafted polyolefins and grafted or ungrafted elastomers.

4. The method according to any one of claims 1 to 3, **characterised in that** the polymer compounds forming the matrix are preferentially selected from the group constituted by low-density polyethylene, linear low-density polyethylene, ultra-low-density polyethylene, high-density polyethylene, high-density and high-molecular-weight polyethylene, high-density and ultra-high-molecular-weight polyethylene, medium-density polyethylene, metallocene polyethylene, polyisobutylene, polybutene, polymethylpentene, polyisoprene, polybutadiene, the cycloolefins, in particular cyclopentene or norbornene, polypropylene, ethylene-propylene copolymers, ethylene and C₄ to C₁₀ α-olefin copolymers, propylene and C₄ to C₁₀ α-olefin copolymers, ethylene-propylene-diene copolymers (EPDM), ethylene-propylene copolymers (EPR), ethylene vinyl acetate copolymer (EVA), mixtures of copolymers with a polymer, more particularly polypropylene/ethylene-propylene copolymer, low-density polyethylene, vinyl acetate copolymer, copolymers of ethylene and of acrylic and methacrylic esters, of styrenebutadiene-styrene, of styrene-ethylene-butadiene-styrene, of styrene-propylene-styrene, of styrene-isoprene-styrene, polysiloxane elastomers.

5. The method according to any one of claims 1 to 4, **characterised in that** the polymer compounds of the matrix are grafted by means of at least one functional monomer, selected from the group constituted by maleic anhydride, itaconic anhydride, citraconic anhydride, acrylic and methacrylic acids, acrylic and methacrylic esters.

6. The method according to any one of claims 1 to 5, **characterised in that** the laminar mineral particles to be exfoliated are of natural or synthetic origin.

7. The method according to any one of claims 1 to 6, **characterised in that** the laminar mineral particles to be exfoliated are clays selected from the groups constituted by the smectite group composed of montmorillonite, nontronite, beidellite, volkonskoite, hectorite, saponite, sanconite, magadiite, and kenyaite, the vermiculite group, the illite group, in particular ledikite, the chlorinated clay group, chalcogenides.

8. The method according to claim 7, **characterised in that** the clays in lamellae or leaves to be exfoliated have a specific surface area of at least 200 m²/g and preferentially of between 300 m²/g and 800 m²/g.

9. The method according to claim 7, **characterised in that** the clays in lamellae or leaves to be exfoliated, being in the form of agglomerates, have a form factor defined by the ratio of the largest dimension over the smallest dimension of the agglomerates of between 1 and 1000.

10. The method according to any one of claims 1 to 9, **characterised in that** the laminar mineral particles to be exfoliated are made organophilic by a treatment prior to the exfoliation by means of an organo-ionic compound belonging to the group of the organo-ammonium and organophosphonium compounds, this organo-ionic compound being of one of the NH₃⁺R₁, NH₂⁺R₂R₃, P⁺R₄R₅R₆R₇ types, wherein the R₁ to R₇ radicals are hydrocarbon chains having at least four carbon atoms.

11. The method according to any one of claims 1 to 10, **characterised in that** the laminar mineral particles to be exfoliated are made organophilic by a treatment prior to the exfoliation by means of a mixture of organo-ionic and organosilane compounds.

12. The method according to one or the other of claims 10 and 11, **characterised in that** the quantity of organo-ionic compounds employed varies between 10 mmoles to 1000 mmoles, preferentially between 20 mmoles and 200 mmoles, and very preferentially between 80 mmoles to 120 mmoles, for 100 g of stacked laminar mineral particles to be treated.

13. The method according to any one of claims 1 to 10, **characterised in that** the compatibility agent present in the composition to be exfoliated is selected from the group constituted by oligomers and/or telomers functionalised by polar groups, polymers and/or copolymers and/or thermoplastic elastomers functionalised by polar and/or grafted groups.

14. The method according to claim 13, **characterised in that** the oligomers and/or telomers have an acrylic, methacrylic, vinylic, styrenic or diene chemical structure.

15. The method according to claim 13, **characterised in that** the polymers and/or copolymers and/or thermoplastic elastomers functionalised by polar groups are selected from the group constituted by the polymer compounds forming the polymer matrix.

16. The method according to any one of claims 1 to 15, **characterised in that** the quantity of previously treated stacked laminar mineral particles to be exfoliated entering into the polymer composition is at the most 60% by weight and preferentially between 0.2% by weight and 40% by weight of the total weight of said composition.

17. The method according to any one of claims 1 to 16, **characterised in that** the quantity of compatibility agent liable to enter into the polymer composition to be exfoliated is between 0% by weight and 40% by weight and preferentially between 2% by weight and 20% by weight of the mass of the stacked laminar mineral particles to be exfoliated.

18. The method according to any one of claims 1 to 17, **characterised in that** a dispersing agent of the laminar mineral particles to be exfoliated is introduced into the composition.

19. The method according to claim 18, **characterised in that** the dispersing agent is selected from the group constituted by the compounds whose chemical structure includes at least one acid function supplied by a group of the carboxylic, phosphoric, phosphonic, sulphuric, sulphonic type, this structure also including:
- ethylene oxide and/or propylene oxide of which the cumulative number of structures of one and/or the other is selected from the range from 1 to 300,
- a group R which may be a saturated or unsaturated linear or non-linear alkyl group, an aryl group, a saturated or unsaturated heterocycle, each group having a number of carbon atoms at the most equal to 28C and desirably selected from the range from 8 to 24C, a steroid group, the R group being able to have at least one function of the -OH, -COOH, -COOR, -NH₂, -CO-NH₂, -CN type,
- a group R' which may be hydrogen or a carbon chain having a carbon number at most equal to 28C and is preferentially between 1 and 4C.

20. The method according to any one of claims 18 and 19, **characterised in that** the concentration of this dispersing agent is between 0.01 % by weight and 1 % by weight, and preferentially from 0.1 % by weight to 0.6% by weight of the mass of the stacked laminar mineral particles to be exfoliated introduced into the composition.

21. The method according to any one of claims 1 to 20, **characterised in that** other agents, which are heat stabilisers, photochemical stabilisers, anti-oxidants, antistatics, lubricants, fire retardants, dyes, flavours, aromas, are introduced into the composition to be exfoliated.

22. The method according to any one of claims 1 to 21, **characterised in that** pulverulent fillers, which are of mineral, organic, natural and/or synthetic origin, are introduced into the composition.

23. The method according to claim 22, **characterised in that** the fillers are pulverulent mineral materials chosen from salts and/or mineral oxides which have or have not been subjected to a surface treatment belonging to the group constituted by calcium carbonates, magnesium carbonates, zinc carbonates, dolomite, lime, magnesium, aluminium trihydroxide, alumina, clays and other silico-aluminas, in particular talc, kaolin, mica, glass beads.

24. The method according to claim 22, **characterised in that** the organic fillers of natural or synthetic origin are selected from the group constituted by the biodegradable natural polymers, in particular carbohydrates, starch, cellulose in the form of wood meal and/or cellulose fibres, dyes, pigments, carbon black, powders of thermosetting and/or thermoplastic synthetic polymers.

25. The method according to any one of claims 22 to 24, **characterised in that** the pulverulent fillers have dimensions of between 0.01 and 300 µm and preferentially between 0.1 and 100 µm.

26. The method according to any one of claims 22 to 24, **characterised in that** the mineral and/or organic fillers are introduced into the composition at a rate of at most 70% by weight and preferentially 0.1 % by weight to 50% by weight of the composition.

27. The method according to any one of claims 1 to 26, **characterised in that** the composition to be exfoliated is transformed into a visco-elastic mixture by kneading and heating to a use temperature of the most viscous polymer compound entering into said composition, then is subjected to thermomechanical working involving compression and shearing, the rate of shearing applied to the visco-elastic mixture during the thermomechanical working being at least equal to 10⁴ second⁻¹ and preferentially between 10⁴ second⁻¹ and 10⁷ second⁻¹.

28. The method according to any one of claims 1 to 27, **characterised in that** the time during which the visco-elastic mixture is subjected to the thermomechanical working involving compression and shearing of step (c) is between 5% and 30% of the total time necessary to perform steps (b) to (f) of said method.

29. The method according to any one of claims 1 to 28, **characterised in that** the visco-elastic mixture coming from the thermomechanical working involving compression and shearing is subjected to a relaxation under gentle mechanical kneading of which the shearing rate is at most equal to 10⁴ second⁻¹ and preferentially between 10 seconds⁻¹ and 10⁴ second⁻¹.

30. The method according to any one of claims 1 to 29, **characterised in that** the temperature of the visco-elastic mixture during the relaxation is at least equal, and preferentially at least 3°C greater, and very preferentially 6°C greater than the temperature used in step (c) of thermomechanical working involving compression and shearing.

31. The method according to any one of claims 1 to 30, **characterised in that** the relaxation time necessary to reach a virtually complete exfoliation of the stacked laminar mineral particles is preferentially between 3 and 10 times the time during which the visco-elastic mixture has been subjected to the thermomechanical working of step (c) involving compression and shearing.

32. The method according to any one of claims 1 to 31, **characterised in that** it is conducted in a non-continuous kneading machine or in an extruder-type continuous kneading machine.

33. The method according to any one of claims 1 to 32, **characterised in that**, when it is performed in a double-screw extruder-type kneading machine, of which the barrel is divided into zones which each possess a heating system and a cooling system, the relaxation of step (d) is effected in at least one relaxation zone placed after the thermomechanical working zone of step (c) comprising compression and shearing, this at least one relaxation zone having a total cumulative length of between 8% and 40%, and preferentially between 8% and 25%, of the total length of the screws.

34. The method according to any one of claims 1 to 33, **characterised in that** the start of at least one visco-elastic mixture relaxation area in an extruder-type kneading machine is located at a distance expressed as a percentage relative to the total length of the screws of between 30% and 70% from the upstream end of said screw.

35. The method according to any one of claims 1 to 34, **characterised in that**, when it is performed in a continuous extruder-type kneading machine, the speed of rotation of the screws is between 50 and 1200 revolutions per minute.

36. Nanocomposite thermoplastic materials obtained according to any one of claims 1 to 35.

37. A use of the nanocomposite thermoplastic materials according to claim 36, in the fields of packaging, of storage of liquids and gases, of coating, and more particularly the medical, paramedical, pharmaceutical, parapharmaceutical, hygiene, cosmetics, oil, electrical construction, household electrical appliance, toy, automobile construction, shipbuilding, air, rail, building and the space field.
